(19)

**Europäisches Patentamt**
**European Patent Office**
**Office européen des brevets**

(11) **EP 4 386 910 A1**

(12) **EUROPEAN PATENT APPLICATION**
published in accordance with Art. 153(4) EPC

(43) Date of publication:
**19.06.2024 Bulletin 2024/25**

(21) Application number: **22855834.2**

(22) Date of filing: **04.08.2022**

(51) International Patent Classification (IPC):
*H01M 4/86* ^(2006.01)   *B01J 23/42* ^(2006.01)
*B01J 35/10* ^(2006.01)   *B01J 37/02* ^(2006.01)
*B01J 37/04* ^(2006.01)   *B01J 37/10* ^(2006.01)
*B01J 37/12* ^(2006.01)   *B01J 37/18* ^(2006.01)
*B01J 37/34* ^(2006.01)   *H01M 4/88* ^(2006.01)
*H01M 4/90* ^(2006.01)   *H01M 4/92* ^(2006.01)
*H01M 8/10* ^(2016.01)

(52) Cooperative Patent Classification (CPC):
**B01J 23/42; B01J 35/60; B01J 37/02; B01J 37/04;**
**B01J 37/10; B01J 37/12; B01J 37/18; B01J 37/34;**
**H01M 4/86; H01M 4/88; H01M 4/90; H01M 4/92;**
**H01M 8/10;** Y02E 60/50

(86) International application number:
**PCT/JP2022/029914**

(87) International publication number:
**WO 2023/017771 (16.02.2023 Gazette 2023/07)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.08.2021 JP 2021130637**

(71) Applicants:
• **University of Yamanashi**
  **Kofu-shi, Yamanashi 400-8510 (JP)**
• **Nikki-Universal Co., Ltd.**
  **Shinagawa-ku**
  **Tokyo 141-8563 (JP)**

(72) Inventors:
• **MIYAO, Toshihiro**
  **Kofu-shi, Yamanashi 400-8510 (JP)**

• **NISHINO, Hanako**
  **Kofu-shi, Yamanashi 400-8510 (JP)**
• **UCHIDA, Makoto**
  **Kofu-shi, Yamanashi 400-8510 (JP)**
• **IIYAMA, Akihiro**
  **Kofu-shi, Yamanashi 400-8510 (JP)**
• **KOIZUMI, Naoto**
  **Hiratsuka-shi, Kanagawa 254-0014 (JP)**
• **SHIBANUMA, Kazuya**
  **Hiratsuka-shi, Kanagawa 254-0014 (JP)**
• **TONE, Naoki**
  **Hiratsuka-shi, Kanagawa 254-0014 (JP)**

(74) Representative: **Gulde & Partner**
**Patent- und Rechtsanwaltskanzlei mbB**
**Wallstraße 58/59**
**10179 Berlin (DE)**

(54) **SUPPORTED METAL CATALYST AND PRODUCTION METHOD THEREOF**

(57) The present invention provides a supported metal catalyst with excellent effectiveness factor of active metal particles while avoiding close contact with the ionomer.

According to the present invention, provided is a supported metal catalyst, comprising: a support that is a collective body of conductive particles; and dispersed active metal particles supported on the conductive particles, wherein: the conductive particles include a plurality of pores; an average entrance pore diameter of the pores is 1 to 20 nm; a standard deviation of the average entrance pore diameter is equal to or less than 50% of the average entrance pore diameter; a number fraction of the active metal particles supported in a surface layer region of the conductive particles divided by a total number of the active metal particles is equal to or more than 50%; the surface layer region is a region on a surface of the conductive particles or a region in the pores within

**(Cont. next page)**

a depth of 15 nm from the surface; an average interparticle distance of the active metal particles is 5 to 20 nm; and a standard deviation of the average interparticle distance is equal to or less than 50% of the average interparticle distance.

Fig. 1

**Description**

**Technical Field**

The present invention relates to a supported metal catalyst and a manufacturing method thereof. The supported metal catalyst of the present invention is suitably used as an electrode catalyst (particularly as a cathode catalyst) of a fuel cell.

**Background Art**

Patent Literature 1 discloses a supported metal catalyst in which active metal particles are supported on MCND (Mesoporous Carbon Nano Dendrite). MCND has a well-developed pore structure, and the ionomer-induced deactivation of the active metal particles can be avoided by supporting the active metal particles in pores.

**Citation List**

**Patent Literature**

[Patent Literature 1] JP-A-2018-10806

**Summary of Invention**

**Technical Problem**

However, the effectiveness factor of the active metal particles is not sufficiently high even in the configuration of Patent Literature 1, and it is desired to further increase the effectiveness factor.
The present invention has been made in view of such circumstances and provides a supported metal catalyst with excellent effectiveness factor of active metal particles while avoiding close contact with the ionomer.

**Solution to Problem**

According to the present invention, provided is a supported metal catalyst, comprising: a support that is a collective body of conductive particles; and dispersed active metal particles supported on the conductive particles, wherein: the conductive particles include a plurality of pores; an average entrance pore diameter of the pores is 1 to 20 nm; a standard deviation of the average entrance pore diameter is equal to or less than 50% of the average entrance pore diameter; a number fraction of the active metal particles supported in a surface layer region of the conductive particles divided by a total number of the active metal particles is equal to or more than 50%; the surface layer region is a region on a surface of the conductive particles or a region in the pores within a depth of 15 nm from the surface; an average interparticle distance of the active metal particles is 5 to 20 nm; and a standard deviation of the average interparticle distance is equal to or less than 50% of the average interparticle distance.
The present inventors have conducted intensive research and have made the following findings. Since MCND in Patent Literature 1 is formed by explosive reaction of silver acetylide, the pore diameter of MCND varies widely. To increase the effectiveness factor of the active metal particles, the active metal particles need to be supported at a shallow position in the pores. However, since the pore diameter of MCND varies widely, it is difficult to control the supporting position of the active metal particles in the pores. Consequently, the active metal particles are supported at a deep position in the pores. At the deep position of the pores, the catalytic reaction rate is lower due to diffusion resistance of reactants used in a catalytic reaction and products generated by the catalytic reaction, resulting in lower effectiveness factor of the catalyst. Therefore, the effectiveness factor of the active metal particles is not sufficient in the supported metal catalyst using MCND of Patent Literature 1.
On the basis of these findings, the inventors have found that the effectiveness factor of the active metal particles can be increased by reducing the variation in the pore diameter of the pores provided on the support and then by causing 50% or more of the active metal particles to be supported in a surface layer region of conductive particles constituting the support.
The supported metal catalyst of the present invention is also characterized in that the average interparticle distance of the active metal particles is 5 to 20 nm and the standard deviation of the average interparticle distance is equal to or less than 50% of the average interparticle distance. When the average interparticle distance is too small, the activity of each active metal particle tends to be low, or adjacent active metal particles tend to fuse with each other, be coarsened, and deteriorate. However, in the supported metal catalyst of the present invention, the average interparticle distance of the active metal particles and the standard deviation thereof are appropriately set, resulting in excellent activity and durability.

According to the present invention, the following inventions are provided.

(1) A supported metal catalyst, comprising:

a support that is a collective body of conductive particles; and
dispersed active metal particles supported on the conductive particles, wherein:

the conductive particles include a plurality of pores;
an average entrance pore diameter of the pores is 1 to 20 nm;
a standard deviation of the average entrance pore diameter is equal to or less than 50% of the average entrance pore diameter;
a number fraction of the active metal particles supported in a surface layer region of the conductive particles divided by a total number of the active metal particles is equal to or more than 50%;
the surface layer region is a region on a surface of the conductive particles or a region in the pores within a depth of 15 nm from the surface;
an average interparticle distance of the active metal particles is 5 to 20 nm; and
a standard deviation of the average interparticle distance is equal to or less than 50% of the average interparticle distance.

(2) The supported metal catalyst of (1), wherein a proportion of the active metal particles in the supported metal catalyst is 16 to 50 mass%.

(3) The supported metal catalyst of (1) or (2), wherein a proportion of the active metal particles in the supported metal catalyst is 21 to 35 mass%.

(4) The supported metal catalyst of any one of (1) to (3), wherein the conductive particles are carbon particles.

(5) The supported metal catalyst of any one of (1) to (4), wherein:

an average interpore distance of the pores is 5 to 20 nm; and
a standard deviation of the average interpore distance is equal to or less than 50% of the average interpore distance.

(6) The supported metal catalyst of any one of (1) to (5), wherein the conductive particles are interconnected structures in which an average of 5 or more primary particles are interconnected.

(7) The supported metal catalyst of (6), wherein an average series connection number of the interconnected structures is equal to or more than 3.

(8) The supported metal catalyst of any one of (1) to (7), wherein an average primary particle diameter of the conductive particles is 20 to 100 nm.

(9) The supported metal catalyst of any one of (1) to (8), wherein a number fraction of the active metal particles supported in the pores divided by a total number of the active metal particles supported in the surface layer region is equal to or more than 40%.

(10) The supported metal catalyst of any one of (1) to (9), wherein the active metal particles are platinum or platinum alloy particles.

(11) The supported metal catalyst of any one of (1) to (10), wherein an average particle diameter of the active metal particles is 1 to 8 nm.

(12) The supported metal catalyst of any one of (1) to (11), wherein a value of [an average particle diameter of the active metal particles divided by the average entrance pore diameter] is 0.2 to 0.8.

(13) The supported metal catalyst of any one of (1) to (12), wherein a number fraction of the active metal particles supported in the surface layer region of the conductive particles divided by the total number of the active metal particles is equal to or more than 60%.

(14) A fuel cell, comprising a cathode-side catalyst layer,
wherein the cathode-side catalyst layer includes the supported metal catalyst of any one of (1) to (13).

(15) A manufacturing method of a supported metal catalyst, comprising:
an initial addition step; a simultaneous addition step; a supporting step; and a step to enhance regular arrangement, wherein:

in the initial addition step, an oxidizing agent that oxidizes an active metal precursor to form oxide particles of active metal is added to an active metal precursor solution containing the active metal precursor to generate a colloid;

in the simultaneous addition step, a neutralizing agent and the oxidizing agent are added simultaneously to the colloid until an amount of the oxidizing agent added reaches a specified amount;

in the supporting step, a support which is a collective body of conductive particles and the colloid are mixed to support the oxide particles on the conductive particles;

in the step to enhance regular arrangement, a regular arrangement of the oxide particles or active metal particles generated by reducing the oxide particles is achieved by performing an arrangement treatment;

the conductive particles include a plurality of pores;

an average entrance pore diameter of the pores is 1 to 20 nm; and

a standard deviation of the average entrance pore diameter is equal to or less than 50% of the average entrance pore diameter.

(16) The method of (15), wherein the oxidizing agent is hydrogen peroxide.

(17) The method of (15) or (16), wherein:

a pH immediately after the initial addition step is 1.0 to 2.5; and

a pH immediately after the simultaneous addition step is 4.0 to 6.0.

(18) The method of any one of (15) to (17), wherein a time from a start of the initial addition step to a completion of the simultaneous addition step is 10 to 30 min.

(19) The method of any one of (15) to (18), wherein the arrangement treatment includes at least one of heat treatment and/or electrochemical treatment.

(20) A manufacturing method of a supported metal catalyst, comprising:

a first step; a surfactant removal step; and a second step, wherein:

the first step comprises a first mixing step, a first reduction step, and a first supporting step;

the second step comprises a second mixing step, a second reduction step, and a second supporting step;

in the first mixing step, a first active metal precursor mixed solution is generated by mixing an active metal precursor solution containing an active metal precursor with a surfactant and an organic solvent;

in the first reduction step, active metal particles are generated by a reduction of the active metal precursor in the first active metal precursor mixed solution;

in the first supporting step, a support which is a collective body of conductive particles and the active metal particles are mixed to disperse and support the active metal particles on the conductive particles;

in the surfactant removal step, a surfactant adhered to the support is removed;

in the second mixing step, a second active metal precursor mixed solution is generated by mixing an active metal precursor solution containing an active metal precursor with a surfactant and an organic solvent;

in the second reduction step, active metal particles are generated by a reduction of the active metal precursor in the second active metal precursor mixed solution;

in the second supporting step, the support after the surfactant removal step and the active metal particles obtained in the second reduction step are mixed to disperse and support the active metal particles obtained in the second reduction step on the conductive particles;

the conductive particles include a plurality of pores;

an average entrance pore diameter of the pores is 1 to 20 nm;

a standard deviation of the average entrance pore diameter is equal to or less than 50% of the average entrance pore diameter; and

a count median diameter measured in the first or second active metal precursor mixed solution by a dynamic light scattering method is 0.5 to 2 times as large as the average entrance pore diameter.

(21) The method of (20), wherein:

in the first reduction step, the reduction is performed by mixing a reducing agent mixed solution containing a reducing agent, an organic agent, water, and a surfactant with the first active metal precursor mixed solution; and

in the second reduction step, the reduction is performed by mixing a reducing agent mixed solution containing a reducing agent, an organic agent, water, and a surfactant with the second active metal precursor mixed solution.

(22) The method of (20) or (21), wherein a removal of the surfactant is performed by heat-treating the support under a reducing gas atmosphere.

(23) The method of any one of (20) to (22), wherein the conductive particles are subjected to an annealing treatment at 800 to 2000°C in a vacuum before the first supporting step.

(24) The method of any one of (20) to (23), wherein the conductive particles are subjected to an annealing treatment at 1100 to 2000°C in a vacuum before the first supporting step.

(25) A manufacturing method of a supported metal catalyst, comprising:

a mixing step; a reduction step; and a supporting step, wherein:

in the mixing step, an active metal precursor mixed solution is generated by mixing an active metal precursor solution containing an active metal precursor with a surfactant and an organic solvent;

in the reduction step, active metal particles are generated by a reduction of the active metal precursor in the active metal precursor mixed solution;

in the supporting step, a support which is a collective body of conductive particles and the active metal particles are mixed to disperse and support the active metal particles on the conductive particles;

the conductive particles include a plurality of pores;

an average entrance pore diameter of the pores is 1 to 20 nm;

a standard deviation of the average entrance pore diameter is equal to or less than 50% of the average entrance pore diameter;

a count median diameter measured in the mixed solution by a dynamic light scattering method is 0.5 to 2 times as large as the average entrance pore diameter; and

the conductive particles are subjected to an annealing treatment at 1100 to 2000°C in a vacuum before the supporting step.

(26) The method of any one of (20) to (25), wherein:

the method comprises a step to enhance regular arrangement after the second supporting step of any one on Claims 20 to 24 or after the supporting step of Claim 25; and

in the step to enhance regular arrangement, a regular arrangement of the active metal particles is achieved by performing an arrangement treatment.

(27) The method of (26), wherein the arrangement treatment includes at least one of heat treatment and/or electrochemical treatment.

(28) The method of any one of (20) to (27), wherein the organic solvent is a hydrophobic organic solvent and includes at least one selected from cyclohexane, heptane, and toluene.

(29) The method of any one of (20) to (28), wherein the surfactant is a nonionic surfactant.

(30) The method of any one of (20) to (29), wherein the active metal precursor includes a platinum precursor compound.

(31) The method of any one of (15) to (30), wherein the conductive particles are carbon particles.

(32) The method of any one of (15) to (31), wherein:

an average interpore distance of the pores is 5 to 20 nm; and

a standard deviation of the average interpore distance is equal to or less than 50% of the average interpore distance.

(33) The method of any one of (15) to (32), wherein the conductive particles are interconnected structures in which an average of 5 or more primary particles are interconnected.

(34) The method of (33), wherein an average series connection number of the interconnected structures is equal to or more than 3.

(35) The method of any one of (15) to (34), wherein an average particle diameter of primary particles of the conductive particles is 20 to 100 nm.

## Brief Description of Drawings

Fig. 1 is a schematic diagram of a supported metal catalyst 1.

Fig. 2A is a schematic diagram of a cross section of the supported metal catalyst 1, and

Fig. 2B is an enlarged view of a region B in Fig. 2A.

Fig. 3 is a schematic diagram of a conductive particle 2 composed of a single particle.

Fig. 4 is a schematic diagram of the conductive particle 2 composed of an interconnected structure 2a.

Fig. 5 is a schematic diagram of a carbon source cohered body 8 in which carbon source spheres 7 cohere to each other.

Fig. 6 is a schematic diagram showing a state in which carbon source cohered bodies 8 are connected to each other.

Fig. 7 is a schematic diagram of a fuel cell.

Fig. 8 is an electron microscope image of carbon particles of Manufacture Example 1.

Fig. 9 is an electron microscope image of carbon particles of Manufacture Example 2.

In Fig. 10, the image on the left side is a cross-sectional secondary electron image of a supported metal catalyst of Example 1, and the image on the right side is a Z-contrast image thereof.

Fig. 11 is a graph showing a relationship between Rw and the count median diameter in the reverse micelle method of Reference Example 1.

In Fig. 12, the image on the upper left side is a secondary electron image of a supported metal catalyst of Example 2, the image on the upper right side is a Z-contrast image thereof, and the images on the lower left and lower right sides are other secondary electron images of the supported metal catalyst of Example 2.

Fig. 13 is a Z-contrast image of the supported metal catalyst of Example 2.

Figs. 14A and 14B show a distribution of distances between centers of gravity of platinum particles of the supported metal catalyst of Example 2. Fig. 14A shows an untreated state, and Fig. 14B shows a state after hydrogen reduction treatment.

Figs. 15A to 15C each show a Z-contrast image or secondary electron image of the supported metal catalyst of Example 2. Fig. 15A shows a Z-contrast image in an untreated state after supporting step, Fig. 15B shows a secondary electron image in a state after hydrogen reduction treatment is performed after the supporting step, and Fig. 15C shows a secondary electron image in a state after oxygen reduction activity measurement is performed after hydrogen reduction.

Fig. 16 is a graph showing a relationship between an oxygen concentration on the bare support and a Pt loading level in Reference Example 2.

Fig. 17 is a graph showing a relationship between an annealing temperature and an oxygen concentration in Reference Example 2.

Fig. 18 is a secondary electron image of a supported metal catalyst of Example 3.

Fig. 19 is a secondary electron image of a supported metal catalyst of Example 4.

Fig. 20 is a graph showing the results of analysis using a quadrupole mass spectrometer to examine the effect of removing remaining surfactant by hydrogen treatment in Reference Example 4.

Fig. 21 is a graph showing a change in pH with time during dropwise addition of an oxidizing agent and a neutralizing agent in Example 5 and Comparative Example 1.

Fig. 22A shows a secondary electron image of a supported metal catalyst manufactured in the same manner as in Example 5, except that an amount of platinum supported was 50 mass%, and Figs. 22B and 22C show secondary electron images of a supported metal catalyst of Example 5. Fig. 22A shows the untreated state after the supporting step, Fig. 22B shows the state after hydrogen reduction treatment is performed after the supporting step, and Fig. 22C shows the state after oxygen reduction activity measurement is performed in the same manner as in Example 2 after hydrogen reduction treatment.

Figs. 23A to 23C are secondary electron images of a supported metal catalyst of Example 6. Figs. 23A and 23B show the state after hydrogen reduction treatment is performed after the supporting step, and Fig. 23C shows the state after oxygen reduction activity measurement is performed in the same manner as in Example 2 after hydrogen reduction treatment.

Fig. 24A is a secondary electron image of the supported metal catalyst of Example 6, and Fig. 24B is a Z-contrast image thereof.

In Fig. 25, the image on the left side is a secondary electron image of a supported metal catalyst of Comparative Example 1, and the image on the right side is a Z-contrast image thereof.

**Description of Embodiments**

Hereinafter, embodiments of the present invention will be explained with reference to the drawings. Various distinctive features shown in the following embodiments can be combined with each other. In addition, an invention can be established independently for each of the distinctive features.

1. Supported Metal Catalyst 1

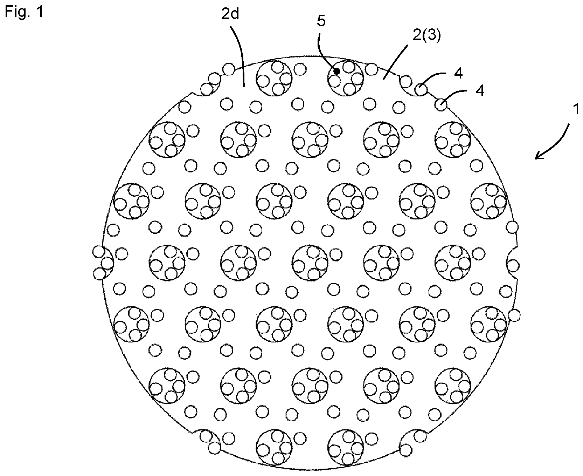

As shown in Figs. 1 to 4, the supported metal catalyst 1 of one embodiment of the present invention includes a support 3 and active metal particles 4. Hereinafter, each configuration will be described in detail.

2. Configuration of Support 3

The support 3 is a collective body of conductive particles 2, and preferably in the form of powder. In this regard, only one conductive particle 2 is shown in Fig. 1 to Fig. 4.

The conductive particles 2 are particles having conductivity. The composition of the conductive particle 2 is not particularly limited. From the viewpoint of conductivity, ease of manufacturing and the like, the conductive particles 2 are preferably carbon particles, more preferably mesoporous carbon particles, and even more preferably ordered mesoporous carbon (OMC) particles having pore diameter and pore spacing with small deviation and periodic arrangement of pores.

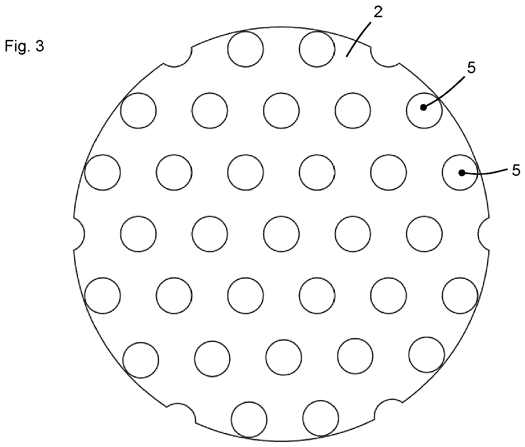

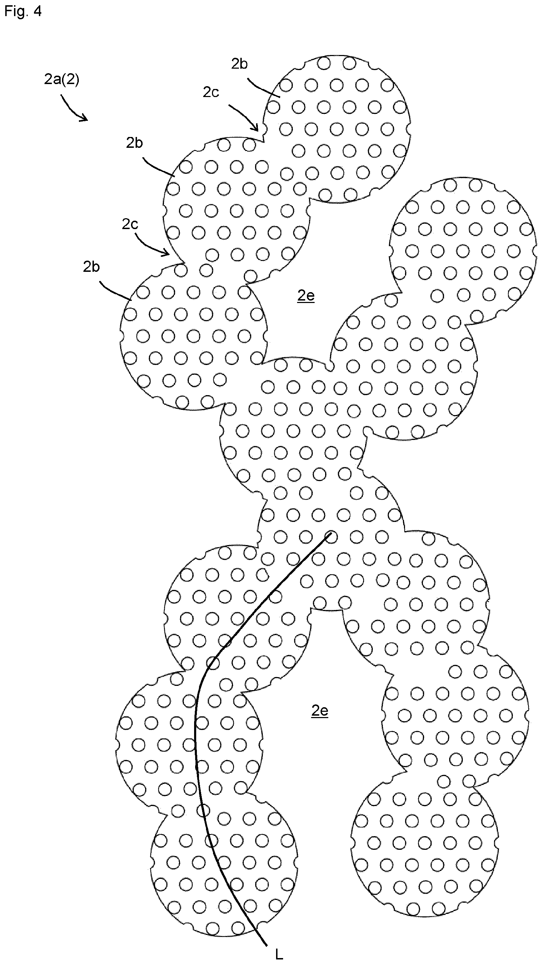

The shape of the conductive particles 2 is not particularly limited. As shown in Fig. 3, the conductive particle 2 may be composed of a (preferably substantially spherical) single particle and is preferably an interconnected structure 2a in which a plurality of (preferably an average of 5 or more) (preferably substantially spherical) primary particles 2b are connected, as shown in Fig. 4. In the following description, the single particle is also referred to as the "primary particle" for convenience. The interconnected structure 2a is referred to as an aggregate and is preferable because a flow path 2e surrounded by the primary particles 2b is formed, which decreases the diffusion resistance of a substance and facilitates catalytic reaction. The flow path 2e may be also referred to as a "primary pore". Further, an agglomerated body of the aggregates that is formed by agglomerating the interconnected structure 2a and the interconnected structure 2a is referred to as a secondary particle, an agglomerate. Since the agglomerate is a secondary particle, it can be crushed relatively easily. A pore formed by a gap between the agglomerates may be referred to as a "secondary pore".

The average primary particle diameter of the conductive particles 2 is preferably 20 to 100 nm. This is because if this value is too small, the entrance diameter of pores 5 may be too small, while if this value is too large, the specific surface area of the support 3 may be too small. This average particle diameter is, specifically for example, 20, 30, 40, 50, 60, 70, 80, 90, or 100 nm, and may be in the range between the two values exemplified herein. The pores 5 open on the primary particle surface of the conductive particles 2, have a nanoscale size and can also be referred to as "nanopores".

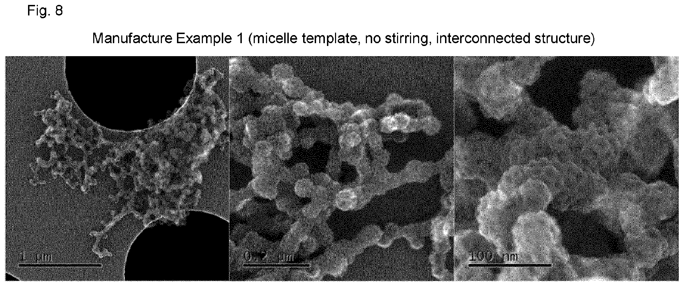

Here, an example of a method for measuring the average primary particle diameter of the conductive particles 2 is described, taking the case where the conductive particles 2 are the interconnected structures 2a of the carbon particles as an example. First, an electron microscope image as shown in Fig. 8 is taken for a powder of the conductive particles 2 by means of a scanning transmission electron microscope (STEM, manufactured by Hitachi High-Tech Corporation, HD-2700) with an aberration correction lens. From the electron microscope image, it can be seen that the carbon particles are interconnected structures that have a thick portion and thin portion alternately and continuously and is formed by interconnecting an average of 5 or more primary particles. The maximum diameter of the thick portion is defined as the primary particle diameter and is measured at 100 or more points, and the average value of the measured results is calculated. Further, the minimum diameter of the thin portion is defined as the diameter of a connected portion between the primary particles and is measured at 100 or more points, and the average value of the measured results is calculated.

As shown in Fig. 4, in the interconnected structure 2a, the thick portion and the thin portion are alternately continuous along its connecting direction. The thick portion is the primary particle 2b, and the thin portion is a connected portion 2c between the primary particles 2b. When the average primary particle diameter of the interconnected structures 2a is defined as A, and the average diameter of the connected portions 2c is defined as B, B/A is preferably 0.1 to 0.9, and more preferably 0.2 to 0.8. If B/A is too small, the strength of the interconnected structures 2a may not be sufficient. B/A is, specifically for example, 0.1, 0.2, 0.3, 0.4, 0.5, 0.6, 0.7, 0.8, or 0.9, and may be in the range between the two values exemplified herein.

When the conductive particles 2 are the single particles, the average particle diameter of the primary particles 2b is an average value of equivalent circle diameter of the single particles. When the conductive particles 2 are the interconnected structures 2a, the average particle diameter is an average value of the maximum width of the thick portions of the interconnected structures 2a. In the present specification, the average is preferably calculated by averaging 50 or more (preferably 100 or more) measured values.

The average connection number of the interconnected structures 2a (the average value of the number of the primary particles 2b included in the interconnected structures 2a) is preferably 5 or more, more preferably 10 or more, and even more preferably 100 or more. This average connection number is, for example, 5 to 10000, specifically for example, 5, 10, 50, 100, 500, 1000, 5000, or 10000, and may be in the range between the two values exemplified herein. The average series connection number of the interconnected structures 2a (the average value of the number of the primary particles 2b connected in series) is preferably 3 or more, and more preferably 5 or more. The connection in series means the connection along one line (straight line or curved line). The series connection number is counted starting from the primary particle where a branch is generated. For example, in a branch of a line L in Fig. 4, the series connection number is 4. The average series connection number is an average value of the series connection number for 50 or more (preferably 100 or more) branches. This average series connection number is, for example, 3 to 100, specifically for example, 3, 5, 10, 50, or 100, and may be in the range between the two values exemplified herein. When the conductive particles 2 have such a structure, the diffusion resistance of a substance becomes particularly low.

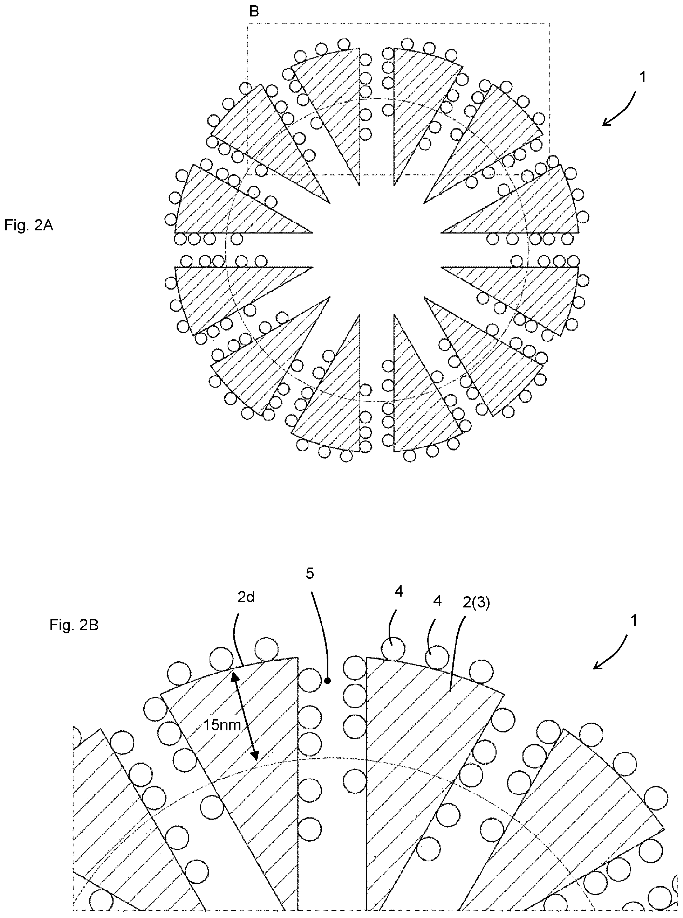

As shown in Fig. 1 to Fig. 3, the conductive particle 2 has a plurality of pores 5. The plurality of pores 5 is preferably regular in size, arrangement, shape and the like. The diameter of the pores 5 may be constant or may vary along the depth direction. In this regard, while the conductive particle 2 in Fig. 2A and Fig. 2B is hollow at the center, the conductive particles 2 and the primary particles may be hollow or solid at the center.

The average entrance pore diameter of the pores 5 is 1 to 20 nm. The average entrance pore diameter is an average value of the equivalent circle diameter of the entrance of the pores 5. If the average entrance pore diameter is too small, it may be difficult to support the active metal particles 4 in the pores 5, and if the average entrance pore diameter is too large, the active metal particles 4 are supported at a deep position in the pores 5 and are unavailable for the catalytic reaction. The average entrance pore diameter is, specifically for example, 1, 2, 3, 4, 5, 6, 7, 8, 9, 10, 11, 12, 13, 14, 15, 16, 17, 18, 19, or 20 nm, and may be in the range between the two values exemplified herein.

Here, an example of the measurement method of the average entrance pore diameter of the pores 5 is described, taking the case where the conductive particles 2 are carbon particles as an example. The observation of an electron microscope image is performed at a magnification of 500,000 times to 1,000,000 times, and the pore size is measured. At that time, the brightness and contrast of the electron microscope image are adjusted so that the boundary between an outer surface of the primary particles of the carbon particles and the pores opening on the outer surface becomes clear. Using a particle diameter measurement software (manufactured by NIRECO Corporation, LUZEX AP), the equivalent circle diameter of each pore is measured for 100 or more pores, and the average entrance pore diameter and its standard deviation are obtained.

In this regard, pores in the following three cases are not counted. (1) Since the primary particles of the carbon particles are spherical or spindle-shaped, the size of the pores located near a side surface cannot be accurately measured by electron microscope observation. (2) Even after adjusting the brightness and contrast of the electron microscope image, the boundary line between the outer surface of the carbon particles and the pores may not be sufficiently clear depending on the shape of a sample and observation conditions. (3) If the sample is not within the exact focus range, the pore size cannot be accurately obtained.

The standard deviation of the average entrance pore diameter of the pores 5 is equal to or less than 50% of the average entrance pore diameter, and preferably equal to or less than 30%. The smaller the standard deviation, the smaller the variation in the entrance diameter of the pores 5, and the easier it is to control the supporting position of the active metal particles 4. This standard deviation is, specifically for example, 0, 5, 10, 15, 20, 25, 30, 35, 40, 45, or 50% of the average entrance pore diameter, and may be in the range between the two values exemplified herein.

The average interpore distance of the pores 5 is preferably 5 to 20 nm. The average interpore distance is an average value of the interpore distance obtained from the distance between circle center points of the adjacent pores 5. If the average interpore distance is too small, the reaction rate may decrease due to the insufficient supply of reactants of the catalytic reaction. If the average interpore distance is too large, the number of the pores 5 may be too small, or the active metal particles 4 may tend to be supported on the surface outside the pores.

Here, an example of the method for measuring the average interpore distance of the pores 5 is described, taking the case where the conductive particles 2 are carbon particles as an example. The observation of the electron microscope image is performed at a magnification of 500,000 times to 1,000,000 times, and the pore size is measured. At that time, the brightness and contrast of the electron microscope image are adjusted so that the boundary between an outer surface of the primary particles of the carbon particles and the pores opening on the outer surface becomes clear. Using the particle diameter measurement software (manufactured by NIRECO Corporation, LUZEX AP), the equivalent circle diameter of each pore is measured for 100 or more pores.

In this regard, pores in the following three cases are not counted. (1) Since the primary particles of the carbon particles are spherical or spindle-shaped, the size of the pores located near a side surface cannot be accurately measured by electron microscope observation. (2) Even after adjusting the brightness and contrast of the electron microscope image, the boundary line between the outer surface of the carbon particles and the pores may not be sufficiently clear depending on the shape of a sample and observation conditions. (3) If the sample is not within the exact focus range, the pore size cannot be accurately obtained.

Next, the circle center coordinates of the pores approximated by a circle are recorded to obtain the equivalent circle diameter of the pores. The interpore distance is obtained at 100 or more points from the distance between circle center points of the adjacent pores, and the average interpore distance and its standard deviation are calculated.

The standard deviation of the average interpore distance of the pores 5 is preferably equal to or less than 50% of the average interpore distance, and more preferably equal to or less than 30%. The smaller the standard deviation, the easier it is for the active metal particles 4 to be supported uniformly. This standard deviation is, specifically for example, 0, 5, 10, 15, 20, 25, 30, 35, 40, 45, or 50% of the average interpore distance, and may be in the range between the two values exemplified herein.

3. Manufacturing Method of Support 3

The support 3 can be manufactured by any method capable of forming the pores 5 having the above-described physical properties, and examples of the manufacturing method of the support 3 include a hard template method and a soft template method.

The hard template method is a method using a solid, such as fine particles, mesoporous materials, and zeolite, as a template. For example, when the conductive particles 2 are carbon particles, a template having regular pores, such as mesoporous silica, is prepared. The pores of this template are impregnated with a carbon source (e.g., sugar, such as sucrose), the carbon source is carbonized, and the template is removed, so that the carbon particles having the regular pores can be obtained. A portion corresponding to the template becomes the pores.

The soft template method is a method using a phase-separated structure of a soft matter, such as micelle, emulsion, liposome, polymer blend, and liquid crystal, as a template.

For example, when the conductive particles 2 are carbon particles, the conductive particles 2 can be manufactured by a method including a cohesion step, a bonding step, and a carbonizing step.

<Cohesion Step>

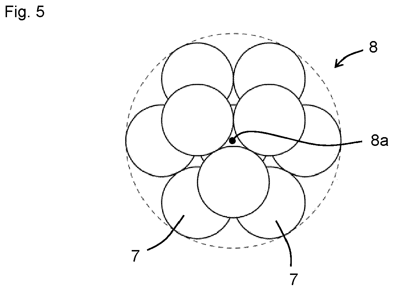

As shown in Fig. 5, in the cohesion step, a carbon source cohered body 8 in which carbon source spheres 7 cohere to each other is formed. The carbon source cohered body 8 becomes a primary particle of the conductive particle 2.

In one example, the carbon source sphere 7 can be formed by forming a coating film of the carbon source on the surface of micelle. The carbon source sphere 7 has a reactive functional group, such as a methylol group or a hydroxyl group, and the carbon source spheres 7 can be bonded to each other, for example, by condensation reaction of the reactive functional groups. Since the carbon source spheres 7 are spheres and cannot cohere without a gap, a gap 8a surrounded by a plurality of carbon source spheres 7 is inevitably formed in the carbon source cohered body 8. The gap 8a becomes the pore 5 of the conductive particle 2. Since the gaps 8a are regularly formed, the pores 5 are also regularly formed.

A manufacture example of the carbon source spheres 7 and the carbon source cohered bodies 8 is as follows.

First, phenol: 0.6057 g as the carbon source, formaldehyde solution: 2.1 mL, and 0.1 M NaOH: 15.1613 g are mixed to prepare a mixed solution.

Next, the mixed solution is stirred in a 70°C bath at 345 rpm for 0.5 h.

Next, after Pluronic F-127 as a template molecule (manufactured by BASF, nonionic surfactant, triblock copolymer composed of a hydrophobic block sandwiched between a pair of hydrophilic blocks, hereinafter referred to as "F-127".): 0.96 g and ultrapure water: 15.0033 g are added, the mixed solution is stirred in a 65°C bath at 345 rpm for 2h.

Next, after ultrapure water: 50 g is added, the mixed solution is stirred in a 65°C bath at 345 rpm for 16 to 18 h and then is allowed to stand still at 25°C, and supernatant liquid: 17.7 mL is taken out.

In the reaction described above, the carbon source sphere 7 in which a micelle composed of F-127 is coated with resol is generated. Then, self-organization of the carbon source spheres 7 takes place and the carbon source cohered bodies 8 are generated.

The micelle can be formed, for example, by dispersing block copolymer having a hydrophilic block and a hydrophobic block in a dispersion medium, such as water. The block copolymer is preferably triblock copolymer composed of a hydrophobic block sandwiched between a pair of hydrophilic blocks. As the block copolymer, for example, a block copolymer in which the hydrophobic block is composed of a polymer of propylene oxide and the hydrophilic block is composed of a polymer of ethylene oxide can be used.

The coating film is composed of, for example, resol. The resol is a phenolic resin having a reactive functional group. The coating film of resol can be formed by polymerizing phenol and formaldehyde in a dispersion medium containing micelle under conditions where formaldehyde is excessive. In one example, the carbon source sphere 7 is formed by coating the micelle composed of the triblock copolymer with a resol coating film.

<Bonding Step>

In the bonding step, carbon source bonded bodies are formed by bonding the carbon source spheres 7 to each other in a state of no stirring or in a state of stirring of the dispersion liquid containing the carbon source cohered bodies 8.

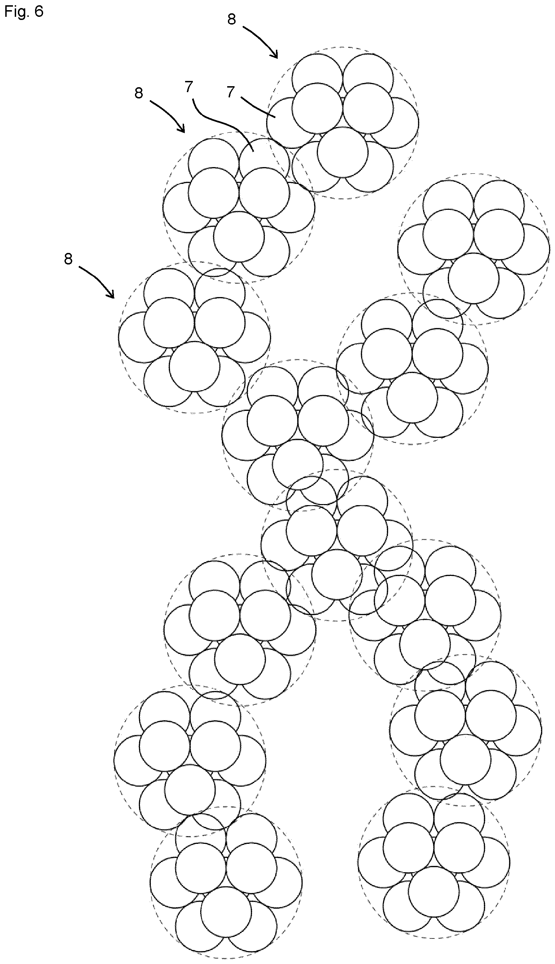

Regarding the bonding between the carbon source spheres 7, when the carbon source spheres 7 are bonded to each other in a state of no stirring or in a state of stirring at the Reynolds number of 1400 or less (hereinafter, referred to as "low-speed stirring") of the dispersion liquid containing the carbon source cohered bodies 8, as shown in Fig. 6, in addition to the bonding between the carbon source spheres 7 included in the same carbon source cohered body 8, the carbon source spheres 7 included in different carbon source cohered bodies 8 are also bonded to each other. In this case, the carbon source bonded bodies having an interconnected structure in which an average of 5 or more carbon source cohered bodies 8 are connected to each other are obtained. By carbonizing such carbon source bonded bodies, the interconnected structures 2a in which an average of 5 or more primary particles 2b are interconnected can be formed. The Reynolds number is preferably 1200 or less, and more preferably 1000 or less. The Reynolds number is, for example, 0 to 1400, specifically for example, 0, 100, 200, 300, 400, 500, 600, 700, 800, 900, 1000, 1100, 1200, 1300, or 1400, and may be in the range between the two values exemplified herein.

The Reynolds number Re can be calculated on the basis of the following equation.

$$Re=d^2 \times n \times \rho / \mu$$

(where d: blade diameter of a stirrer [m], n: number of rotation [$s^{-1}$], $\rho$: liquid density [$kg/m^3$], $\mu$: liquid viscosity [Pa·s].)

In one example, Reynolds number Re=1490 when d=$20 \times 10^{-3}$ m, n=0.83 $s^{-1}$ (in the case of 50 rpm), and in the case of 130°C, pure water, $\rho$=934.5 kg/m3, and $\mu$=0.208 mPa·s.

On the other hand, when the carbon source spheres 7 are bonded to each other by stirring the dispersion liquid at high speed, the bonding between the carbon source spheres 7 contained in the same carbon source cohered bodies 8 occurs dominantly, and the carbon source bonded bodies of the single particles are obtained. By carbonizing such carbon source bonded bodies, the conductive particles 2 having a single particle structure in which the primary particles 2b are not connected to each other can be obtained.

The dispersion medium is preferably water. Further, it is preferable to bond the carbon source spheres 7 to each other by heating the dispersion liquid. The reaction temperature is, for example, 100 to 150°C, specifically for example, 100, 110, 120, 130, 140, or 150°C, and may be in the range between the two values exemplified herein. The reaction time is, for example, 5 to 48 h, specifically for example, 5, 10, 15, 20, 25, 30, 35, 40, 45, or 48 h, and may be in the range between the two values exemplified herein.

The structure of the carbon source bonded bodies obtained by the reaction can be changed by changing the reaction temperature, the reaction time, and the concentration of the reaction solution. By increasing the reaction temperature, increasing the reaction time, or increasing the concentration of the reaction solution, the connection number and the primary particle diameter of the carbon source cohered bodies 8 can be increased.

<Carbonizing Step>

In the carbonizing step, the conductive particles 2 can be obtained by carbonizing the carbon source bonded bodies.

When the carbon source bonded bodies obtained in the above-described bonding step are heated and carbonized as they are, the primary particles 2b (the primary particles 2b in a state of the single particles, or the primary particles 2b in a state of the interconnected structures 2a) are prone to be three-dimensionally connected to each other to form a structure in which the primary particles 2b excessively cohere to each other. Therefore, it is preferable to redisperse the carbon source bonded bodies and then dry them before carbonization. Consequently, the cohesion of the primary particles 2b can be mitigated. Further, it is preferable to thinly spread the dispersion liquid obtained by the redispersion of the carbon source bonded bodies and then dry it. Consequently, the cohesion of the primary particles 2b can be further mitigated. As an example of a method of spreading the dispersion liquid thinly, there is a method of dropping the dispersion liquid onto a surface, such as the surface of a glass plate. In one example, by dropping the dispersion liquid onto a glass plate heated by a hot plate, the dispersion liquid can be dried in a thinly spread state.

Further, the cohesion of the primary particles 2b may be mitigated by spray-drying the dispersion liquid obtained by the re-dispersion of the carbon source bonded bodies. Freeze-drying is preferable as a drying method.

The carbon source bonded bodies can be carbonized by heating the carbon source bonded bodies in an atmosphere of an inert gas (e.g., nitrogen gas). The carbon source bonded bodies can be carbonized by, for example, heating the carbon source bonded bodies to 600 to 1000°C. This temperature is, specifically for example, 600, 650, 700, 750, 800, 850, 900, 950, or 1000°C, and may be in the range between the two values exemplified herein.

An annealing step of performing the annealing treatment of the conductive particles 2 may be performed after the carbonizing step. The structure of the conductive particles 2 can be controlled by changing the temperature or time of the annealing treatment. The annealing treatment can be performed by, for example, heating the conductive particles 2 in flowing nitrogen or a vacuum. The temperature of the annealing treatment is, for example, 800 to 2000°C. This temperature is, specifically for example, 800, 900, 1000, 1100, 1200, 1300, 1400, 1500, 1600, 1700, 1800, 1900, or 2000°C, and may be in the range between the two values exemplified herein.

If the active metal particles 4 are supported by the reverse micelle method described below, it is preferable to perform the annealing step before the first supporting step. Preferably, this annealing step is performed at 1100 to 2000°C in a vacuum. As shown in Examples described below, the following are found: (1) in the reverse micelle method, the lower the oxygen content in the conductive particles 2, the larger the amount of the active metal particles 4 supported tends to be, and (2) the oxygen content in the conductive particles 2 is reduced by annealing treatment at 1100 to 2000°C in a vacuum. Combining these findings, it can be seen that the annealing treatment at 1100 to 2000°C in a vacuum can reduce the oxygen content in the conductive particles 2 and increase the amount of the active metal particles 4 supported.

The annealing time is, for example, 0.5 h or longer, and preferably 0.5 to 20 h. The annealing time is, specifically for example, 0.5, 1, 2, 3, 4, 5, 6, 7, 8, 9, 10, 15, or 20 h, and may be in the range between the two values exemplified herein.

In the present specification, "vacuum" means a state in which the pressure is reduced to $10^{-2}$ hPa or lower (preferably $10^{-3}$ hPa or lower, $10^{-4}$ hPa or lower, or $10^{-5}$ hPa or lower).

<Others>

In addition to the above-described method, the interconnected structures 2a may be generated by connecting the primary particles 2b to each other using a linking agent. The primary particles 2b may be generated by bonding the carbon source spheres 7 to each other while stirring the dispersion liquid at high speed or may be generated by dividing coarse particles of the carbon source (carbon source coarse particles). Here, the carbon source coarse particles may be manufactured by a method described later in Manufacture Example 2 and are particles having the primary particle diameter of more than 100 nm. Examples of the linking agent include compounds having a plurality of reactive functional groups. Each of the reactive functional groups is connected to the primary particles 2b, so that the primary particles 2b are connected to each other via the linking agent.

As the linking agent, specifically, for example, sugar, such as sucrose, and alcohol, such as furfuryl alcohol, can be used.

4. Configuration of Active Metal Particle 4

As shown in Fig. 1, the active metal particles 4 are dispersed and supported on the conductive particles 2. The active metal particles 4 are fine particles of metal or alloy that can function as a catalyst. The active metal particles 4 are preferably platinum or platinum alloy particles. As the platinum alloy, an alloy of platinum and transition metal is preferable. Examples of the transition metal include cobalt and nickel.

As shown in Fig. 1 to Fig. 2B, the active metal particles 4 are supported in a region on a surface 2d of the conductive particles 2 or in the pores 5. Since the diffusion rate of the substance is small at a deep position in the pores 5, the active metal particles 4 supported at the deep position in the pores 5 make little or no contribution to the catalytic reaction. Therefore, if the number fraction of the active metal particles 4 supported at the deep position in the pores 5 is large, the effectiveness factor of the active metal particles 4 will decrease correspondingly. If the effectiveness factor of the active metal particle 4 decreases, more active metal particles 4 need to be supported to achieve the required reaction rate, which leads to an increase in the cost of the catalyst.

Therefore, it is preferable that the proportion of the active metal particles 4 supported in a surface layer region of the conductive particles 2 is high. The surface layer region is a region on the surface 2d of the conductive particles 2 or a region in the pores 5 within a depth X (=15 nm) from the surface 2d (that is, a region outside the alternate long and short dash line in Fig. 2B).

Specifically, the number fraction of the active metal particles 4 supported in the surface layer region (hereinafter, referred to as "particles supported on the surface layer") (the number of the active metal particles 4 supported in the surface layer region/the number of all active metal particles 4) is preferably 50% or more, and more preferably 60% or more. In such a case, the effectiveness factor of the active metal particles 4 is excellent. This number fraction is, specifically for example, 50, 55, 60, 65, 70, 75, 80, 85, 90, 95, 99, or 100%, and may be in the range between the two values exemplified herein.

Here, an example of a method of calculating the number fraction of the particles supported on the surface layer is described, taking the case where the active metal particles 4 are platinum particles and the conductive particles 2 are carbon particles as an example.

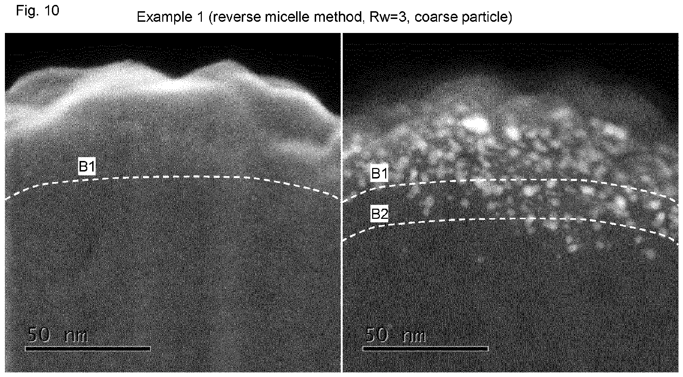

First, a powder of carbon particles on which platinum particles are supported is placed on a silicon wafer substrate, and a protective layer is formed on the outer surface of sample particles by gold vapor deposition. Then, a focused ion beam (FIB) device (FB2200, manufactured by Hitachi High-Tech Corporation) is used to cut the sample particles with the gallium ion beam, and a sample section for electron microscope observation is prepared. Then, when observing the cut surface with an electron microscope, metal particles (Au particles and Pt particles) present on the sample are observed from a Z-contrast image (atomic number contrast image) shown in Fig. 10, and at the same time, the composition of each of the metal particles is analyzed using an energy-dispersive X-ray spectrometer to distinguish between the Pt particles and the Au particles. The point of change (boundary line) from a portion where the Au particles exist to a portion where only the Pt particles exist without the Au particles is defined as the boundary line between the outer surface and the cross section of the carbon particle. On the electron microscope image, a line segment parallel to the outer surface boundary line is drawn at a position 15 nm from the above-described sample outer surface boundary line in the direction toward the center of the sample particle, and the number fraction of the particles supported on the surface layer is calculated from the ratio of the number of Pt particles between the outer surface boundary line and the line segment at the 15 nm position and the number of Pt particles deeper beyond the line segment at the 15 nm position in the direction toward the center of the sample particle.

In this regard, X may be 5 nm or 10 nm and is more preferably 5 nm or less. Further, X may be set to be the average particle diameter of the primary particles $2b \times Y$. Y is, for example, 0.1, 0.2, 0.3, 0.4, or 0.5, and is preferably 0.3. Further, X may be set to be the average entrance pore diameter of the pores $5 \times Z$. Z is, for example, 1, 2, 3, 4, or 5, and is preferably 1.

Further, the number fraction of the active metal particles 4 supported in the pores 5 divided by the total number of the active metal particles 4 supported in the surface layer region of the conductive particles 2 is preferably 40% or more. The supported metal catalyst 1 may be thickly coated with an electrolyte material, and in such a case, the activity of the active metal particles 4 coated with the electrolyte material may decrease. By increasing the number fraction of the active metal particles 4 supported in the pores 5, the influence of the decrease in the activity of the active metal particles 4 can be suppressed. This number fraction is, specifically for example, 40, 45, 50, 51, 52, 53, 54, 55, 56, 57, 58, 59, 60, 65, 70, 75, 80, 85, 90, 95, 99, or 100%, and may be in the range between the two values exemplified herein.

In actual operation of a fuel cell vehicle, when the vehicle travels at low speed with a small current density on the electrode catalyst, the electrolyte material present on the support surface may adhere to the active metal particles present on the support surface, and their activity may decrease (reaction rate decrease on the active metal particles on the surface). On the other hand, when the vehicle travels at high speed with a large current density, the adhesion of the electrolyte material to the active metal particles present on the support surface is mitigated by the large amount of water generated on the cathode catalyst, and the activity is restored. However, since the reaction rate of the entire catalyst layer is high, the rate on activity metal in a deep portion of the pores may decrease due to the diffusion resistance to the deep portion of the pores (reaction rate decrease on the active metal particles in the deep portion of the pores). For the above reasons, to address all operating conditions of fuel cell vehicles, the majority of the active metal particles are arranged inside the pores while the active metal particles are arranged in the region inside the pores (15 nm or less) from the vicinity of the support surface, so that a superior catalyst for fuel cell vehicles can be prepared. Further, from this viewpoint, it is considered to be even more effective if the active metal particles are arranged within a range of 10 nm or less, preferably 5 nm or less from the surface.

The active metal particles 4 have an average interparticle distance of 5 to 20 nm, and a standard deviation of the average interparticle distance is equal to or less than 50% of the average interparticle distance.

The average interparticle distance of the active metal particles 4 is preferably 5 to 20 nm. The average interparticle distance is the average value of the interparticle distances obtained from the distance between circle center points of the adjacent active metal particles 4. If the average interparticle distance is too small, the reaction rate may decrease due to the insufficient supply of reactants of the catalytic reaction. If the average interpore distance is too large, the number of the active metal particles 4 may be too small.

Here, an example of measurement method of the average interparticle distance of the active metal particles 4 is described, taking the case where the conductive particles 2 are carbon particles as an example. The observation of the electron microscope image is performed at a magnification of 500,000 times to 1,000,000 times, and the particle size is measured. At that time, the brightness and contrast of the electron microscope image are adjusted, so that the active metal particles 4 become clear. Using the particle diameter measurement software (manufactured by NIRECO Corporation, LUZEX AP), the equivalent circle diameter of each particle is measured for 100 or more particles.

In this regard, particles in the following three cases are not counted. (1) Since the primary particles of the carbon particles are spherical or spindle-shaped, the size of the particles located near a side surface cannot be accurately measured by electron microscope observation. (2) Even after adjusting the brightness and contrast of the electron microscope image, the active metal particles 4 may not be sufficiently clear depending on the shape of a sample and observation conditions. (3) If the sample is not within the exact focus range, the particle size cannot be accurately obtained.

Next, the circle center coordinates of the particles approximated by a circle are recorded to obtain the equivalent circle diameter of the particles. The interparticle distance is obtained at 100 or more points from the distance between circle center points of the adjacent particles, and the average interparticle distance and its standard deviation are calculated.

The standard deviation of the average interparticle distance of the active metal particles 4 is preferably equal to or less than 50% of the average interparticle distance, and more preferably equal to or less than 30%. The smaller the standard deviation, the easier it is for the active metal particles 4 to be supported uniformly. This standard deviation is, specifically for example, 0, 5, 10, 15, 20, 25, 30, 35, 40, 45, or 50% of the average interparticle distance, and may be in the range between the two values exemplified herein.

The average particle diameter of the active metal particles 4 is preferably 1 to 8 nm. This average particle diameter is, specifically for example, 1, 2, 3, 4, 5, 6, 7, or 8 nm, and may be in the range between the two values exemplified herein. When the average particle diameter of the active metal particles 4 is less than 1 nm, the active metal particles 4 may dissolve as the electrode reaction progresses. When the average particle diameter is more than 8 nm, the electrochemically active surface area may become small, and the desired electrode performance may not be achieved. The average particle diameter of the active metal particles 4 is an average value of the equivalent circle diameter.

Here, a method of calculating the average particle diameter is described, taking the case where the active metal particles 4 are platinum particles as an example. First, a catalyst in which platinum particles are supported is placed on a grid with a carbon supporting film for an electron microscope, and the average particle diameter of the equivalent circle diameter of the platinum particles is calculated from an image obtained with an electron microscope.

The value of [the average particle diameter of the active metal particles 4 divided by the average entrance pore diameter of the pores 5] is preferably 0.2 to 0.8. In such a condition, the active metal particles 4 can be easily supported in the surface layer region. This value is, specifically for example, 0.2, 0.3, 0.4, 0.5, 0.6, 0.7, or 0.8, and may be in the range between the two values exemplified herein.

The proportion of the active metal particles 4 in the supported metal catalyst 1 (hereinafter referred to as "supporting amount of active metal particles 4") is preferably 16 to 50 mass%, and more preferably 21 to 35 mass%. If this proportion is too small, the performance of the catalyst may not be fully exhibited. If this proportion is too large, the distance between the adjacent active metal particles 4 becomes too small, and deterioration due to aggregation and enlargement of the active metal particles 4 may easily occur. The supporting amount of the active metal particles 4 is, specifically for example, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 mass%, and may be in the range between the two values exemplified herein.

The supporting amount of the active metal particles 4 can be measured by thermogravimetric analysis. In the thermogravimetric analysis method, the supported metal catalyst 1 is burned in air, and the supporting amount can be calculated taking the residue as the active metal particles 4.

5. Manufacturing Method of Supported Metal Catalyst

As a method for supporting the active metal particles 4, a usual impregnation method can be first considered. However, with the usual impregnation method, it is not possible to selectively support the particles only near the entrance of the pores, and the particle size distribution of the active metal particles 4 is widened, resulting in mass transfer resistance in addition to inhibition by electrolyte adsorption. Consequently, when used as a cathode of a fuel cell, the particle growth of the active metal particles 4 progresses during operation, causing deterioration.

Therefore, a method in which the active metal particles 4 are synthesized in advance in a liquid phase and then supported is preferable. That is, the active metal particles 4 or oxides thereof with uniform size are synthesized in advance in the liquid phase by the reverse micelle method, the colloid method, or the like, and then supported on the support having regular pores. Since the size of the pores 5 of the conductive particles 2 is uniform, the selectivity of the supporting position of the active metal particles 4 can be enhanced, which leads to suppression of catalyst deactivation and reduction of the amount of the active metal particles 4 used.

Further, by supporting the active metal particles 4 by the method described below, it is possible to obtain the supported metal catalyst 1 having appropriate values for the average interparticle distance of the active metal particles 4 and its standard deviation.

5-1. Reverse Micelle Method

In the reverse micelle method, a manufacturing method of the supported metal catalyst comprises a mixing step, a reduction step, and a supporting step. Hereinafter, each step will be described.

<Mixing Step>

In the mixing step, a mixed solution (hereinafter, referred to as "active metal precursor mixed solution") is generated by mixing an active metal precursor solution containing an active metal precursor with a surfactant and an organic solvent.

The active metal precursor is a compound that serves as a raw material reduced to form active metal, and examples thereof include an acid, a salt, or a complex of the active metal. As the active metal precursor, for example, a metal chloride acid and a salt thereof (e.g., potassium salt), an ammine complex, ethylenediamine complex, acetylacetonate complex of the active metal or the like can be used. When the active metal is platinum, platinum precursor compound, such as chloroplatinic acid (e.g., hexachloroplatinic acid, tetrachloroplatinic acid), acetylacetonate platinum ($Pt(acac)_2$), chloroplatinate (e.g., potassium chloroplatinate ($K_2PtCl_4$)), and platinum ammine complex can be used. The active metal precursor solution is preferably an aqueous solution. Further, the active metal precursor is not limited to one type, and a second or third metal salt may be added.

As the surfactant, any surfactant capable of forming a reverse micelle can be used. The examples of the surfactant include anionic surfactant (for example, soap, sulfated oil, polyoxyethylene alkyl ether sulfate, alkyl sulfate ester salt, alkylbenzene sulfonate, alkane sulfonate, α-olefin sulfonate, N-acylamino acid salt, dialkyl sulfosuccinate, alkyl naphthalene sulfonate), cationic surfactant (for example, alkyl trimethylammonium salt, alkyl pyridinium salt), nonionic surfactant (for example, polyoxyethylene alkyl ether, polyoxyethylene alkyl phenyl ether, polyoxyethylene fatty acid ester, polyhydric alcohol fatty acid ester), and amphoteric surfactant (for example, betaine and sulfobetaine). The nonionic surfactant is preferable, the surfactant having a phenylene group is more preferable, polyoxyalkylene alkylphenyl ether is more preferable, polyoxyethylene alkylphenyl ether is preferable, and polyoxyethylene nonylphenyl ether is more preferable. The average addition mole number of polyoxyalkylene is preferably 2 to 10, more preferably 3 to 7, and even more preferably 5. The average addition mole number is, specifically for example, 2, 3, 4, 5, 6, 7, 8, 9, or 10, and may be in the range between the two values exemplified herein.

The molar ratio Rw between water and the surfactant is preferably 1 to 7 and more preferably 2 to 5. Further, the concentration of the surfactant is preferably equal to or more than the critical micelle concentration and preferably 40 to 160 mmol/L.

As the organic solvent, a hydrophobic organic solvent is preferable, and an organic solvent containing at least one selected from cyclohexane, heptane, and toluene is more preferable.

<Reduction Step>

In the reduction step, the active metal precursor in the active metal precursor mixed solution is reduced to generate the active metal particles 4. The liquid temperature is preferably 20°C to 30°C.

The active metal precursor can be reduced by adding a reducing agent to the mixed solution. Examples of the reducing agent include $MBR_3H$, MH (where M represents lithium, sodium, or potassium, and R represents a hydrogen atom or a hydrocarbon group, and the hydrocarbon group may be linear or branched and may be saturated or unsaturated), and hydrogen, and $NaBH_4$ is preferable.

The reduction is preferably performed by mixing a solution containing a reducing agent, an organic solvent, water, and surfactant with the active metal precursor mixed solution. In such a case, as compared with the case where the solid reducing agent is directly added to the active metal precursor mixed solution, the reduction rate of the active metal precursor is controlled, and the monodispersity of Pt particles is improved, so that the increase in the supporting amount on the surface layer is expected.

The surfactant in the reducing agent mixed solution can be selected from the group listed in the above-described <Mixing Step> and is preferably the same as the surfactant mixed in the <Mixing Step>.

The molar ratio Rw between the water and the surfactant in the reducing agent mixed solution is preferably 1 to 7 and more preferably 2 to 5, and it is even more preferable that the concentration is the same as the concentration of the active metal precursor mixed solution.

As the organic solvent in the reducing agent mixed solution, a hydrophobic organic solvent is preferable, a solvent containing at least one selected from cyclohexane, heptane, and toluene is more preferable, and the solvent same as the solvent in the active metal precursor mixed solution is even more preferable.

The active metal particles 4 obtained in the reduction step are in a state of being confined in the reverse micelles, and the diameter of the reverse micelles is larger than the diameter of the active metal particles 4. Therefore, the active metal particles 4 are suppressed from being supported at a deep position in the pores 5, and the number fraction of the active metal particles 4 supported in the surface layer region is increased.

The count median diameter measured in the mixed solution by the dynamic light scattering method is the reverse micelle diameter. This reverse micelle diameter is preferably 0.5 to 2 times as large as the average entrance pore diameter of the pores 5. In such a case, the number fraction of the active metal particles 4 supported in the surface layer region is particularly increased. This factor is, specifically for example, 0.5, 0.6, 0.7, 0.8, 0.9, 1, 1.1, 1.2, 1.3, 1.4, 1.5, 1.6, 1.7, 1.8, 1.9, or 2 times, and may be in the range between the two values exemplified herein.

The reverse micelle in the solvent is composed of a surfactant layer surrounding a fine water droplet encapsulating the active metal particle and a solvent layer formed around the surfactant layer. When the reverse micelle diameter is sufficiently smaller than the support pore entrance diameter (the reverse micelle diameter is less than 0.5 times as large as the entrance pore diameter of the pore 5), the interaction between a pore wall and the surfactant is weak because the solvent layer formed outside the surfactant layer hinders contacting the surfactant layer with the inner wall of the pore entrance, so that the reverse micelle penetrates deep inside the pore without collapsing. On the other hand, when the reverse micelle diameter exceeds twice the entrance pore diameter of the pore 5, the reverse micelle diameter is too large compared to the pore entrance diameter, and the reverse micelle cannot penetrate the pore, so that the active metal particle is supported on the surface outside the pore. When the reverse micelle diameter is within the range of 0.5 to 2 times as large as the entrance pore diameter of the pore 5, the diameter of the surfactant layer surrounded by the solvent layer is almost the same as the pore entrance diameter, so that, in the course of the reverse micelle being penetrating the pore entrance, the stability of the reverse micelle is lost and the micelle structure collapses due to strong adsorption between a hydrophobic portion of a surfactant molecule and the support pore wall. At that time, since the active metal particles are adsorbed on a hydrophilic portion of the surfactant, the active metal particles are trapped near the pore entrance via the surfactant and fixed at a short distance from the pore entrance.

<Supporting Step>

In the supporting step, the support 3 which is a collective body of the conductive particles 2 and the active metal particles 4 obtained in the reduction step are mixed to disperse and support the active metal particles 4 on the conductive particles 2.

As the support 3, the support described in "2. Configuration of Support 3" can be used. It is preferable to mix the mixed solution after the reduction step with the support 3. The uniformity of supporting can be enhanced by stirring the mixed solution obtained after mixing. The stirring time is preferably 1 h or longer, and more preferably 6 h or longer. This stirring time is, specifically for example, 1, 2, 3, 4, 5, 6, 7, 8, 9, 10, 20, 30, 40, 50, or 100 h, and may be in the range between the two values exemplified herein.

The supported metal catalyst 1 after supporting can be taken out from the mixed solution by a solid-liquid separation method such as filtration.

<Surfactant Removal Step>

The supported metal catalyst 1 taken out can be subjected to a treatment to remove the remaining surfactant. The surfactant can be removed by washing with a solvent, reduction treatment, or the like. It is preferable to remove most of the surfactant by washing with a solvent and remove a small amount of the surfactant remaining in the pores by subsequent reduction treatment. Examples of the solvent include water, and compounds having hydrophilic and hydrophobic groups. Examples of the compound having hydrophilic and hydrophobic groups include alcohol. This alcohol is preferably methanol or ethanol. The supported metal catalyst 1 after washing is preferably dried by drying under reduced pressure or the like.

The reduction treatment can be performed by heat-treating the supported metal catalyst 1 taken out from the mixed solution under a reducing gas atmosphere. The supported metal catalyst 1 is preferably the supported metal catalyst that was washed with a solvent and dried under reduced pressure before reduction treatment. The reducing gas is a gas having a reducing action, and examples thereof include a mixed gas of hydrogen and inert gas (e.g., nitrogen). The hydrogen concentration in the reducing gas is, for example, 1 to 100%, and preferably 1 to 10%. This concentration may be, specifically for example, 1, 2, 3, 4, 5, 6, 7, 8, 9, 10, 50, or 100%, and may be in the range between the two values exemplified herein. The heat-treating temperature is, for example, 100 to 400°C, and preferably 150 to 250°C. Since the reducing gas enters the pores 5 of the conductive particles 2 as well, the surfactant remaining in the pores 5 can be hydrogenated and effectively removed. This temperature is, specifically for example, 100, 150, 200, 250, 300, 350, or 400°C, and may be in the range between the two values exemplified herein.

<Step to Enhance Regular Arrangement>

The manufacturing method of the supported metal catalyst may comprise a step to enhance regular arrangement after the supporting step. In the step to enhance regular arrangement, a regular arrangement of the active metal particles 4 is achieved by performing an arrangement treatment. The arrangement treatment can be performed in the same manner as in "<Arrangement Step>" in "5-3. Colloid Method". When the active metal particles 4 were supported by the reverse micellar method, many of the active metal particles 4 are supported in the pores 5 and are already regularly arranged, but some are supported on the edges of the pores 5 or outside the pores 5. The active metal particles 4 supported in such unstable positions are thought to move into the more stable pores 5 by performing the arrangement treatment, and the active metal particles 4 become more regularly arranged by increasing the proportion of the active metal particles 4 in the pores 5. Further, it is thought that the dissolution and reprecipitation of the active metal particles 4 proceed by potential sweep in the electrolyte, reducing the variation in particle diameter of the active metal particles 4 and increasing the proportion of active metal particles 4 supported in the pores 5.

In this regard, the reduction treatment in the above-described surfactant removal step can also serve as the arrangement treatment. In other words, by the reduction treatment, the surfactant is removed and regular arrangement of the active metal particles 4 is promoted. As the arrangement treatment, only the reduction treatment may be performed, or another arrangement treatment may be performed before or after the reduction treatment.

5-2. Reverse Micelle Method with Multiple Cycles

In the above-described reverse micelle method, it may be difficult to sufficiently increase the supporting amount of the active metal particles 4 by performing only one cycle. In such cases, the supporting amount can be increased by performing the reverse micelle method with multiple cycles.

In one example, this method comprises a first step, a surfactant removal step, and a second step. The first step comprises a first mixing step, a first reduction step, and a first supporting step. The second step comprises a second mixing step, a second reduction step, and a second supporting step.

Hereinafter, each step will be described.

<First Mixing Step>

In the first mixing step, a first active metal precursor mixed solution is generated by mixing an active metal precursor solution containing an active metal precursor with a surfactant and an organic solvent. This step can be performed in the same manner as <Mixing Step> described above.

<First Reduction Step>

In the first reduction step, the active metal particles 4 are generated by the reduction of the active metal precursor in the first active metal precursor mixed solution. This step can be performed in the same manner as <Reduction Step> described above.

<First Supporting Step>

In the first supporting step, the support 3 which is a collective body of the conductive particles 2 and the active metal particles 4 obtained in the first reduction step are mixed to disperse and support the active metal particles 4 on the conductive particles 2. This step can be performed in the same manner as <Supporting Step> described above.

<Surfactant Removal Step>

In the surfactant removal step, the surfactant adhered to the support 3 is removed. The removal of the surfactant can be performed in the same manner as in <Surfactant Removal Step> described above. This step is preferably performed by reduction treatment, and more preferably performed by washing with a solvent and subsequent reduction treatment. In this case, the surfactant in the pores 5 where the active metal particles 4 are not supported can also be effectively removed, thus promoting the supporting of the active metal particles 4 in the pores 5 where the active metal particles 4 are not supported in the next supporting step.

<Second Mixing Step>

In the second mixing step, a second active metal precursor mixed solution is generated by mixing an active metal precursor solution containing an active metal precursor with a surfactant and an organic solvent. This step can be performed in the same manner as the first mixing step. The active metal precursor solution, surfactant, and organic solvent may be different from those in the first mixing step, and are preferably the same.

<Second Reduction Step>

In the second reduction step, the active metal particles 4 are generated by the reduction of the active metal precursor in the second active metal precursor mixed solution. This step can be performed in the same manner as <Reduction Step> described above.

<Second Supporting Step>

In the second supporting step, the support after the surfactant removal step and the active metal particles 4 obtained in the second reduction step are mixed to disperse and support the active metal particles 4 obtained in the second reduction step on the conductive particles 2. This step can be performed in the same manner as <Supporting Step> described above.

<Surfactant Removal Step>

The surfactant removal step may be performed after the second supporting step. This step can be performed in the same manner as <Surfactant Removal Step> in "5-1. Reverse Micelle Method".

<Arrangement Step>

The reverse micelle method with multiple cycles may comprise an arrangement step after the second supporting step. This step can be performed in the same manner as <Arrangement Step> in "5-1. Reverse Micelle Method".

Through the above-described steps, it is possible to obtain the supported metal catalyst 1 with an increased supporting amount of the active metal particles 4. If it is desired to further increase the supporting amount of the active metal particles, a second surfactant removal step and a third step can be performed after the second step. The second surfactant removal step can be performed in the same manner as <Surfactant Removal Step> described above. The third step can be performed in the same manner as the second step.

5-3. Colloid Method

In the colloid method, the manufacturing method of the supported metal catalyst comprises an initial addition step, a simultaneous addition step, a supporting step, and an arrangement step.

<Initial Addition Step>

In the initial addition step, an oxidizing agent that oxidizes the active metal precursor to form oxide particles of the active metal is added to the active metal precursor solution containing the active metal precursor to generate a colloid.

The description of the active metal precursor solution is the same as that of the reverse micellar method.

The oxidizing agent is, for example, hydrogen peroxide. The active metal precursor is oxidized by the oxidizing agent to generate oxides of the active metal. The oxides are in the form of fine particles and dispersed in the mixed solution.

In one example, the addition of the oxidizing agent lowers the pH, and the pH immediately after the initial addition step becomes, for example, 1.0 to 2.5. This pH is, specifically for example, 1.0, 1.1, 1.2, 1.3, 1.4, 1.5, 1.6, 1.7, 1.8, 1.9, 2.0, 2.1, 2.2, 2.3, 2.4, or 2.5, and may be in the range between the two values exemplified herein.

In the initial addition step, only the oxidizing agent may be added, or the neutralizing agent may be added along with the oxidizing agent. Further, only the neutralizing agent may be added before the initial addition to bring the pH closer to the target value described below.

simultaneous Addition Step>

In the simultaneous addition step, the neutralizing agent and the oxidizing agent are added simultaneously to the colloid until the amount of the oxidizing agent added reaches a specified amount.

In one example, the neutralizing agent is an aqueous solution of a basic substance such as sodium hydroxide, and is added for the purpose of increasing the pH lowered in the initial addition step to make it closer to a target value. The target value of the pH is, for example, 4.0 to 6.0, preferably 4.5 to 5.5, and more preferably 4.9 to 5.1. If the pH is too low, oxidation of the active metal precursor may be less likely to proceed, and if the pH is too high, the colloid may be unstable. The target value is, specifically for example, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, or 6.0, and may be in the range between the two values exemplified herein.

In Comparative Example 1 described below, after the initial addition step, the specified amount of the oxidizing agent was added by repeating the neutralizing agent addition step, in which only the neutralizing agent is added, and the oxidizing agent addition step, in which only the oxidizing agent is added. In this method, the pH increased immediately after the neutralizing agent was added and decreased immediately after the oxidizing agent was added, making the colloid unstable and making it easier for the oxide particles in the colloid to aggregate. Further, in the case of Comparative Example 1, the oxide particles in the colloid were likely to aggregate because it took time to add the specified amount of the oxidizing agent and finally adjust the pH to the target pH.

In contrast, in this method, the neutralizing agent and oxidizing agent are added simultaneously. More specifically, when the neutralizing agent is added to increase the pH lowered in the initial addition step, the oxidizing agent is also added simultaneously. With this method, the specified amount of oxidizing agent can be added in a short time while suppressing pH fluctuation, and the pH immediately after the simultaneous addition step becomes the value of the target value of the pH described above. According to this method, since the aggregation of oxide particles in the colloid is suppressed by destabilization of the colloid, the colloid in which fine and uniform oxide particles are suspended can be obtained.

The neutralizing agent and oxidizing agent may be added manually, but from the viewpoint of more reliably suppressing pH fluctuation, it is preferable to add them using an automatic titration device.

<Supporting Step>

In the supporting step, the support 3 which is a collective body of the conductive particles 2 and the colloid are mixed to support the oxide particles on the conductive particles 2.

As the support 3, the support described in "2. Configuration of Support 3" can be used. The uniformity of supporting can be enhanced by stirring the mixed solution obtained after mixing. The stirring time is preferably 1 h or longer, and more preferably 6 h or longer. This time is, for example, 1 to 100 h, specifically for example, 1, 2, 3, 4, 5, 6, 7, 8, 9, 10, 20, 30, 40, 50, or 100 h, and may be in the range between the two values exemplified herein. The stirring temperature is, for example, 70 to 100°C, specifically for example, 70, 75, 80, 85, 90, 95, 99, or 100°C, and may be in the range between the two values exemplified herein.

The supported metal catalyst 1 after supporting can be taken out from the mixed solution by a solid-liquid separation method such as filtration.

<Step to Enhance Regular Arrangement >

In the step to enhance regular arrangement, a regular arrangement of the oxide particles or active metal particles 4 generated by reducing the oxide particles is achieved by performing an arrangement treatment.

Preferably, the arrangement treatment includes at least one of heat treatment and/or electrochemical treatment.

Examples of the heat treatment include heating in inert gas, reducing gas, oxidizing gas, or vacuum. More specific examples of the heat treatment include heating and reducing under a hydrogen flow (e.g., under a flow of 5% $H_2/N_2$ at a flow rate of 500 mL/min, held at 300°C for 1 h)), heating in inert gas (e.g., under a flow of $N_2$ at a flow rate of 500 mL/min, held at 300°C for 1 h), vacuum heating (e.g., under reduced pressure to $5 \times 10^{-5}$ hPa, held at 300°C for 1 h), and heating oxidization under oxygen (or oxygen-containing gas) flow (e.g., under a flow of 5% $O_2/N_2$ at a flow rate of 500 mL/min, held at 200°C for 1 h).

Examples of the electrochemical treatment include potential sweep (e.g., 100 cycles at 500 mV/s from 0.05 V to 1.15 V under $N_2$ saturation) in an electrolyte (e.g., 0.1 M perchloric acid aqueous solution, 0.1 M sulfuric acid aqueous solution, etc.), potential sweep (e.g., repeating the sweep 20 times at 20 mV/s from 0.25V to 1.0 V under $O_2$ saturation), and potential step (e.g., 10,000 cycles of holding at 1.0 V for 3 s and holding at 0.6 V for 3 s, under $N_2$ saturation).

Immediately after the supporting step, the oxide particles are adhered to the surface of the conductive particles 2 in the form of a layer and are not supported in a regular arrangement. However, by performing the step to enhance regular arrangement, the regular arrangement of the oxide particles or active metal particles 4 generated by reducing the oxide particles can be enhanced by performing an arrangement treatment.

If the step to enhance regular arrangement is accompanied by the reduction of oxide particles as in the case of heat treatment with reducing gas, the reduction of oxide particles and the enhancement of regular arrangement of the oxide particles or active metal particles 4 generated by the reduction of the oxide particles proceed simultaneously. On the other hand, if the step to enhance regular arrangement is not accompanied by the reduction of oxide particles, it is preferable to perform the reduction treatment of oxide particles before or after the arrangement step. The active metal particles 4 are generated by the reduction treatment of the oxide particles.

For example, it is preferable that the reduction treatment of the oxide particles supported on the conductive particles 2 (which also serves as the arrangement treatment) is performed after the supporting step, and another arrangement treatment is then performed as needed.

5-4. Protective Colloid Method

In the protective colloid method, the manufacturing method of the supported metal catalyst comprises a mixing step, a reduction step, and a supporting step. Hereinafter, each step will be described.

<Mixing Step>

In the mixing step, a mixed solution is generated by mixing an active metal precursor solution containing an active metal precursor with a protecting polymer agent and a reducing agent.

The description of the active metal precursor and its solution is similar to that in the reverse micelle method.

The protecting polymer agent is any substance capable of adhering to the active metal precursor to form a hydrophilic protective colloid and preferably contains at least one of polyvinyl pyrrolidone, polyacrylic acid, and/or polyvinyl alcohol.

As the reducing agent, any reducing agent capable of reducing the active metal precursor can be used. For example, the reducing agent exemplified in the description of the reverse micelle method and alcohol (ethylene glycol, ethanol, methanol, and the like) can be used, and alcohol is preferable.

<Reduction Step>

In the reduction step, the active metal precursor in the mixed solution is reduced to generate the active metal particles 4.

The reduction of the active metal precursor can be performed using the reducing agent in the mixed solution. When alcohol is used as the reducing agent, the reduction is preferably performed by refluxing the mixed solution.

The active metal particles 4 obtained in the reduction step are in a state of hydrophilic protective colloid, and the diameter of the entire hydrophilic protective colloid is larger than the diameter of the active metal particle 4 itself. Therefore, the active metal particles 4 are suppressed from being supported at a deep position in the pores 5, and the number fraction of the active metal particles 4 supported in the surface layer region is increased.

The count median diameter measured in the mixed solution by the dynamic light scattering method corresponds to the diameter of the entire hydrophilic protective colloid, and this count median diameter is preferably 0.5 to 2 times as large as the average entrance pore diameter of the pores 5, which is similar to the reverse micelle method. This factor is, specifically for example, 0.5, 0.6, 0.7, 0.8, 0.9, 1, 1.1, 1.2, 1.3, 1.4, 1.5, 1.6, 1.7, 1.8, 1.9, or 2 times, and may be in the range between the two values exemplified herein.

<Supporting Step>

The description of the supporting step is similar to that in the reverse micelle method.

6. Fuel Cell 200

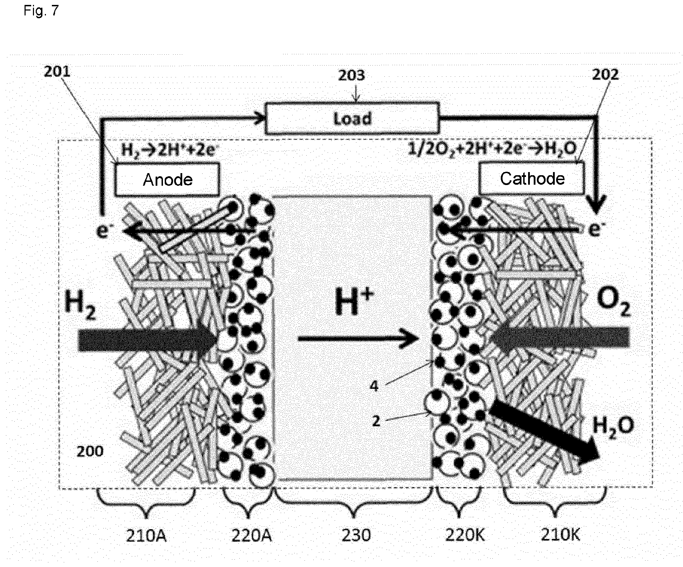

Fig. 7 shows a schematic diagram of a fuel cell. In Fig. 7, a fuel cell 200 is configured such that a catalyst layer 220A and a gas diffusion layer 210A on a side of an anode 201 and a catalyst layer 220K and a gas diffusion layer 210K on a side of a cathode 202 face each other, respectively, interposing an electrolyte membrane 230 therebetween. The anode-side gas diffusion layer 210A, the anode-side catalyst layer 220A, the electrolyte membrane 230, the cathode-side catalyst layer 220K, and the cathode-side gas diffusion layer 210K are arranged in this order. By connecting a load 203 between the anode 201 and the cathode 202 of the fuel cell 200, electric power is output to the load 203.

The cathode-side catalyst layer 220K preferably contains the supported metal catalyst 1. When the cathode reaction occurs at a deep position of the pores 5, water generated by the reaction is not properly discharged, and the activity of the active metal particles 4 is lowered. Since, in the supported metal catalyst 1 of the present invention, the number fraction of the active metal particles 4 supported in the surface layer region of the conductive particles 2 is high, the above problem is alleviated when the cathode-side catalyst layer 220K contains the supported metal catalyst 1.

**Examples**

1. Manufacture of Support

The support is manufactured by the method described below.

1-1. Manufacture Example 1 (micelle template, no stirring, interconnected structure)

In Manufacture Example 1, a support that was a powder of carbon particles was manufactured using micelle as a template.

<Cohesion Step>

First, a mixed solution was prepared by mixing phenol: 0.6057 g as the carbon source, formaldehyde solution: 2.1 mL, and 0.1 M NaOH: 15.1613 g.

Next, the mixed solution was stirred at 345 rpm for 0.5 h in a 70°C bath.

Next, after Pluronic F-127 (manufactured by BASF, nonionic surfactant, triblock copolymer composed of a hydrophobic block sandwiched between a pair of hydrophilic blocks, hereinafter referred to as "F-127"): 0.96 g as the template molecule and ultrapure water: 15.0033 g were added, the mixed solution was stirred at 345 rpm for 2h in a 65°C bath.

Next, after ultrapure water: 50 g was added, the mixed solution was stirred in a 65°C bath at 345 rpm for 16 to 18 h and then was allowed to stand still at 25°C, and supernatant liquid: 17.7mL was taken out.

In the reaction described above, the carbon source spheres 7 in which micelle composed of F-127 was coated with resol were generated. Then, self-organization of the carbon source spheres 7 took place and the carbon source cohered bodies 8 were generated.

<Bonding Step>

The dispersion liquid obtained by mixing the supernatant liquid: 17.7 mL and ultrapure water: 56 g was allowed to stand still in an autoclave at 130°C for 24 h without stirring, so that the carbon source spheres 7 were bonded to each other to form the carbon source bonded bodies.
Next, the carbon source bonded bodies were taken out by filtration and washed with water and then dried by vacuum heating at 50°C.

<Carbonizing Step>

Next, 0.3 g of the powder of the carbon source bonded bodies after drying by vacuum heating was treated in 40 mL of ultrapure water for 5 min using an ultrasonic homogenizer to prepare dispersion liquid. Next, this dispersion liquid was sprayed into 750 mL of liquid nitrogen. The obtained frozen fine powder was subjected to a freeze-drying step for 16 h in a freeze-drying apparatus to obtain a dry powder of the carbon source bonded bodies.
Next, the dry powder obtained in the above-described step was carbonized by heating in nitrogen at 700°C for 2 h to obtain a powder of carbon particles. The obtained powder of carbon particles had a very low degree of cohesion between the particles.
An electron microscope image shown in Fig. 8 was taken for the obtained powder using a scanning transmission electron microscope (STEM, manufactured by Hitachi High-Tech Corporation, HD-2700) with an aberration correction lens. As is clear from the electron microscope image, it was found that the carbon particles had continuous thick and thin portions arranged alternately and were interconnected structures in which an average of more than 5 primary particles were interconnected. In the interconnected structures, the average connection number of primary particles was 10 or more, and the average series connection number was 4.3.
The maximum diameter of the thick portion was taken as the primary particle diameter and was measured at 100 or more points, and the average value calculated was $55.7\pm5.4$ nm. Further, the minimum diameter of the thin portion was taken as the diameter of the connected portion of the primary particles and was measured at 100 or more points, and the average value calculated was $37.7\pm5.4$ nm.
Next, the electron microscope image was observed at a magnification of 500,000 to 1,000,000, and the pore size was measured. At that time, the brightness and contrast of the electron microscope image were adjusted, so that the boundary between the outer surface of the primary particles of the carbon particles and the pores opening on the outer surface became clear. Using a particle diameter measurement software (manufactured by NIRECO Corporation, LUZEX AP), the equivalent circle diameter of each pore was measured for 100 or more pores, and the average entrance pore diameter and its standard deviation obtained were $5.2\pm0.5$ nm. The value after $\pm$ indicates the standard deviation.
In this regard, pores in the following three cases were not counted. (1) Since the primary particles of the carbon particles are spherical or spindle-shaped, the size of the pores located near a side surface cannot be accurately measured by electron microscope observation. (2) Even after adjusting the brightness and contrast of the electron microscope image, the boundary line between the outer surface of the carbon particles and the pores may not be sufficiently clear depending on the shape of a sample and observation conditions. (3) If the sample is not within the exact focus range, the pore size cannot be accurately obtained.
Next, the circle center coordinates of the pores approximated by a circle were recorded when obtaining the equivalent circle diameter of the pores. The interpore distance was obtained at 100 or more points from the distance between circle center points of the adjacent pores, and the average interpore distance and its standard deviation calculated were $12.6\pm1.4$ nm.

1-2. Manufacture Example 2 (micelle template, coarse particle)

<Resol Precursor Gel Formation Step>

First, the mixed solution was prepared by mixing ethanol: 69.11 g, ultrapure water: 4.48 mL, and F-127: 3.62 g.
Next, the mixed solution was stirred at room temperature for 0.5 h.
Next, after resorcinol: 11.01 g as the carbon source was added, the mixed solution was stirred at room temperature for 0.5 h.
Next, after 37% formalin: 7.3048 g was added, the mixed solution was stirred at room temperature for 0.5 h.
Next, after 5 mol/dm$^3$ hydrochloric acid: 1.182 g was added, the mixed solution was stirred at 30°C and 300 rpm for 72 h.
Next, after settling, 16.0226 g of the lower layer of two separated phases was taken out.

<Resol Precursor Gel Polymerization Step>

Next, the lower layer taken out was allowed to stand still at 90°C for 24 h.

<Carbonizing Step>

Next, the carbonization was performed by heating in nitrogen at 800°C for 3 h to obtain a powder of carbon particles.

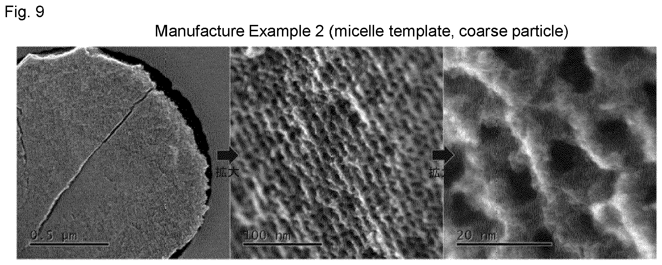

An electron microscope image shown in Fig. 9 was taken for the obtained powder of carbon particles in the same manner as Manufacture Example 1. As is clear from the electron microscope image, the carbon particles were coarse particles.

The average entrance pore diameter, its standard deviation, the average interpore distance, and its standard deviation obtained by the same method as in Manufacturing Example 1 were 4.6±1.1 nm and 10.4±1.1 nm, respectively.

1-3. Manufacture Example 3 (annealing at 1000°C)

A graphite crucible accommodating 200 mg of the carbon particle powder obtained in Manufacture Example 1 was placed in a high vacuum induction heating furnace, and preliminary evacuation was performed for 12 h. The temperature was raised from 25°C to 700°C in 30 min and held at the same temperature for 5 min, while evacuating the high vacuum induction heating furnace to a pressure of $5\times10^{-4}$ hPa or lower. Thereafter, the temperature was raised to the target maximum temperature at 100 °C/h and held at the same temperature for 1 h followed by cooling to obtain the carbon particles of Manufacture Example 3. For example, when the target temperature was 1000°C, the temperature rising time from 700°C to 1000°C was 3 h.

1-4. Manufacture Example 4 (annealing at 1200°C)

The carbon particles of Manufacture Example 4 were obtained in the same manner as in Manufacture Example 3 except that the target temperature was 1200°C.

1-5. Manufacture Example 5 (annealing at 1400°C)

The carbon particles of Manufacture Example 5 were obtained in the same manner as in Manufacture Example 3 except that the target temperature was 1400°C.

2. Supporting Active Metal Particle

The active metal particles were supported on the support by the method described below.

2-1. Example 1 (reverse micelle method, Rw=3, coarse particle)

<Mixing Step>

A 60 mmol/L of surfactant (NP-5, polyoxyethylene nonylphenyl ether with an average of 5 oxyethylene groups)/cyclohexane solution was prepared in a volumetric flask.

After allowing the prepared solution to stand still for one day, the addition amount of 40 mmol/L (Pt: 7684 ppm) of $H_2PtCl_6$ aqueous solution was adjusted so that Rw was equal to 3 (mol/mol) to generate the active metal precursor mixed solution. Here, Rw is a molar ratio between water and the surfactant (water/surfactant) .

<Reduction Step>

While the obtained active metal precursor mixed solution was stirred at room temperature for 5 h, 20 equivalents of $NaBH_4$ with respect to Pt was added. At this time, $H_2PtCl_6$ was reduced by $NaBH_4$, causing a change in the color tone of the solution, and the platinum particles were encapsulated in the reverse micelles. The count median diameter of the reverse micelles measured by the dynamic scattering method was 5.9 nm. This was 1.28 times as large as the average entrance pore diameter (=4.6 nm) of the carbon particles obtained in Manufacture Example 2.

The carbon particles obtained in Manufacture Example 2 were put into the solution after the reduction step in the ratio such that the amount of Pt supported was 20 mass%, and the solution was stirred overnight at room temperature.

Next, the obtained product was filtered through a membrane filter, washed with methanol (100 mL) on the membrane filter, and subjected to drying under reduced pressure to remove the surfactant. Through the above steps, the supported metal catalyst in which the platinum particles were supported on the carbon particles was obtained.

The average particle diameter of the platinum particles supported on the carbon particles was calculated by the method described below. First, the Pt-supported catalyst was placed on a grid with a carbon supporting film for an electron microscope, and from the image obtained by observing it with an electron microscope, the average particle diameter of the platinum particles was calculated by the elliptical approximation. As a result, the average particle diameter of the platinum particles was 2.9 nm.

The number fraction of the platinum particles supported in the surface layer region (hereinafter, referred to as "particles supported on the surface layer") was calculated by the method described below. First, the powder of the carbon particles supporting the platinum particles was placed on a silicon wafer substrate, and the protective layer was formed on the outer surface of the sample particles by gold vapor deposition. Then, the focused ion beam (FIB) device (FB2200, manufactured by Hitachi High-Tech Corporation) was used to cut the sample particles with the gallium ion beam, and a sample section for electron microscope observation was prepared. Then, when observing the cut surface with an electron microscope, metal particles (Au particles and Pt particles) present on the sample were observed from a Z-contrast image (atomic number contrast image) shown on the right side of Fig. 10, and at the same time, the composition of each of the metal particles was analyzed using an energy-dispersive X-ray spectrometer to distinguish between Pt particles and Au particles. The point of change (boundary line) from a portion where both Au and Pt particles existed to a portion where only Pt particles existed without the Au particles was defined as the boundary line between the outer surface and the cross section of the carbon particle. On the electron microscope image, a line segment B2 parallel to the outer surface boundary line was drawn at a position 15 nm from the above-described sample outer surface boundary line B1 in the direction toward the center of the sample particle, and the number fraction of the particles supported on the surface layer was calculated from the ratio of the number of Pt particles between the outer surface boundary line B1 and the line segment B2 at the 15 nm position and the number of Pt particles deeper beyond the line segment at the 15 nm position in the direction toward the center of the sample particle. As a result, the number fraction of the particles supported on the surface layer was 86%.

Further, the number fraction of the particles supported in the pores (hereinafter, referred to as "particles supported in the surface layer pores") divided by the total number of the particles supported on the surface layer was calculated by the method described below. In the STEM observation of the platinum supported carbon particles, the position of the pore entrance in the plane direction was specified from the secondary electron image, and then the position of all platinum supported on and inside the carbon particles in the observation field was specified in the plane direction from the Z-contrast image. Next, by comparing the obtained position of the pore entrance with the obtained position of platinum, the number fraction of platinum supported in the pores was calculated. At this time, it was determined that the platinum which was observed in the Z-contrast image but was not observed in the secondary electron image was supported inside the pores. The platinum present in the back hemisphere of the carbon particles was excluded with reference to the depth of focus when acquiring the Z-contrast image. As a result, the number fraction of the particles supported in the surface layer pores was 74.4%.

The arrangement of the platinum particles was enhanced in the same way as in Example 2 below, and the average interparticle distance and standard deviation of the platinum particles were also almost the same as those in Example 2.

2-2. Reference Example 1 (reverse micelle method, Rw=2to 6, coarse particle)

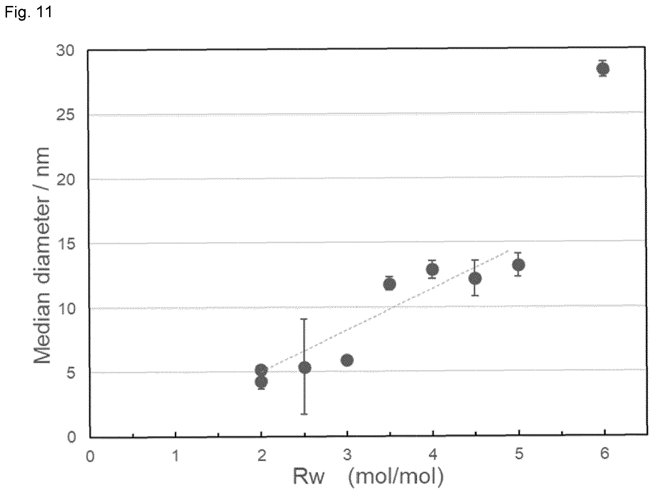

The mixing step and the reduction step were performed in the same manner as Example 1, except that Rw was changed within the range between 2 to 6, and the count median diameter measured in the mixed solution after the reduction step by the dynamic light scattering method was measured. The result is shown in Fig. 11. The horizontal axis in Fig. 11 represents Rw, and the vertical axis represents the count median diameter.

The measurement conditions of the count median diameter were as follows.
Measurement device: manufactured by HORIBA, Ltd., model: SZ-100V2

The measurement was performed in the nanoanalysis mode with a gate time of 640 ns. The measurement was performed three times or more, and the average value was taken as the count median diameter.

As shown in Fig. 11, the value of the count median diameter depends on the value of Rw and was about 6 nm when Rw=3.

2-3. Example 2 (reverse micelle method, Rw=3, two-liquid mixing method)

<Mixing Step>

A 100-mL solution of 60 mmol/L surfactant (NP-5, polyoxyethylene nonylphenyl ether, average addition mole number=5)/cyclohexane was prepared in a volumetric flask.

After allowing the prepared solution to stand still for one day, 40 mmol/L (Pt: 7684 ppm) of $H_2PtCl_6$ aqueous solution was added so that Rw was 3 (mol/mol) to generate the active metal precursor mixed solution.

<Reduction Step>

Similarly, a solution of 60 mmol/L of surfactant (NP-5, polyoxyethylene nonylphenyl ether, average addition mole number=5)/cyclohexane was prepared in a volumetric flask.

After the prepared solution was allowed to stand still for one day, $NaBH_4$ aqueous solution was added so that Rw became 3 (mol/mol), to generate the reducing agent mixed solution. Here, $NaBH_4$ was added so that its concentration became 20 equivalent with respect to Pt. Then, the reducing agent mixed solution was added to the active metal precursor mixed solution and mixed with stirring.

At this time, $H_2PtCl_6$ was reduced by $NaBH_4$, and the count median diameter of the reverse micelles was 6.1 nm. This was 1.3 times as large as the average entrance pore diameter (=4.6 nm) of the carbon particles obtained in Manufacture Example 2.

<Supporting Step>

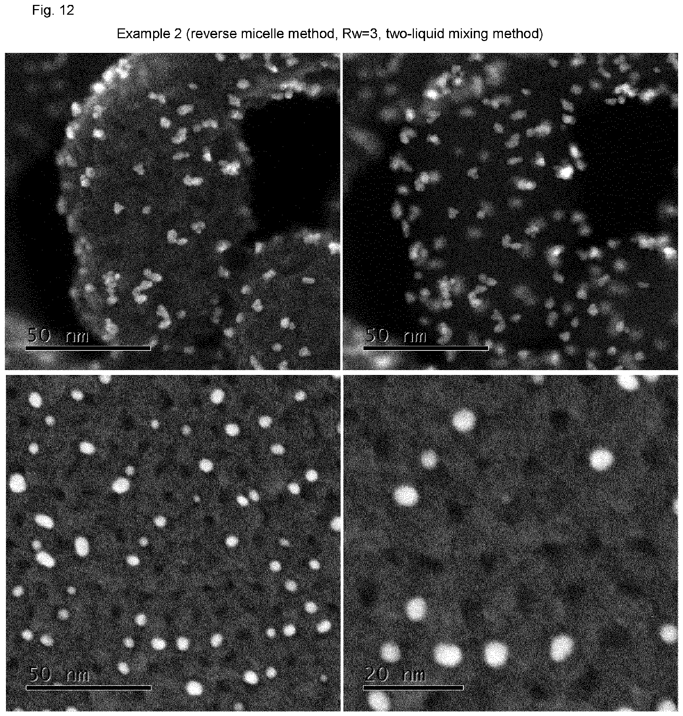

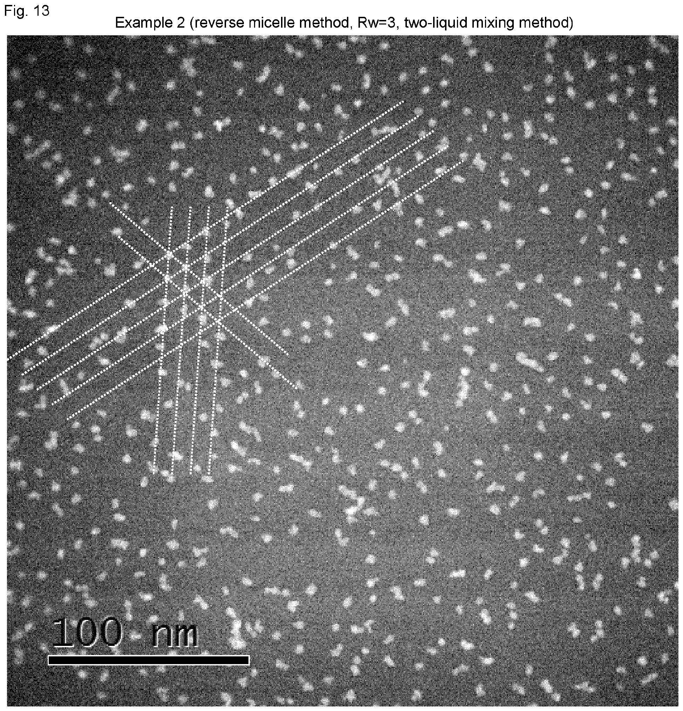

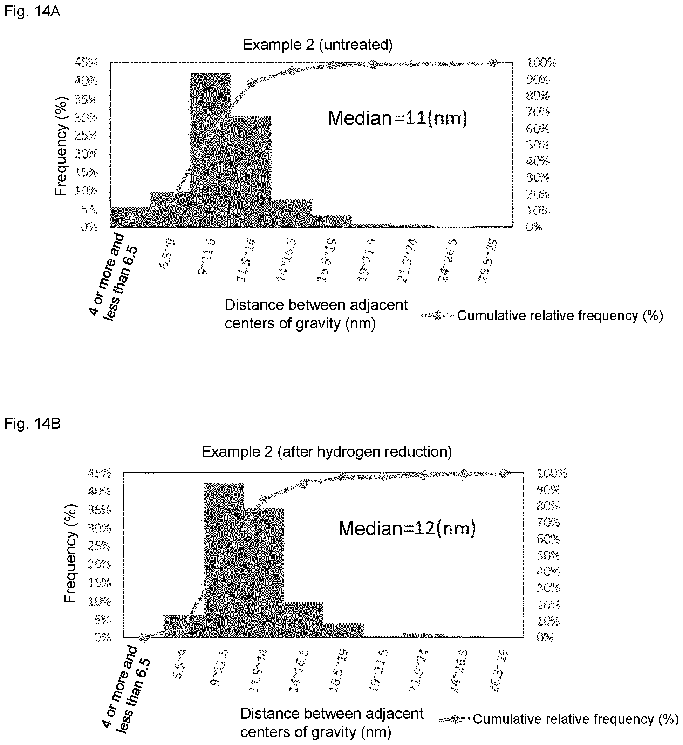

The supported metal catalyst in which platinum particles were supported on carbon particles was obtained by performing the supporting step in the same manner as in Example 1, except that the carbon particles obtained in Manufacture Example 3 were used in the supporting step. At this time, the carbon particles and the solution of the reduction step were mixed at a ratio such that the amount of Pt added was 20 mass%. The ZC image (Z contrast image) and SE image (secondary electron image) of the surface of the obtained supported metal catalyst are shown in Figs. 12 and 13. As shown in Fig. 13, most of the platinum particles supported are arranged on the dotted lines, indicating that they are regularly arranged. The distribution of the distances between the centers of gravity of the platinum particles was measured, and the distribution shown in Fig. 14A was obtained. The average interparticle distance was 11 nm and the standard deviation was 3 nm.

The average particle diameter of the platinum particles calculated by the same method as in Example 1 was 4.8 nm. The number fraction of the particles supported in the surface layer pores calculated by the same method as Example 1 was 60% or more. Further, the platinum loading level measured by thermogravimetric analysis was 16 mass%.

<Oxygen Reduction Activity>

The oxygen reduction activity of the prepared catalyst was measured by the rotating disk electrode (RDE) method. The catalyst ink was prepared by ultrasonically dispersing the catalyst powder in an ethanol solution containing a small amount of ultrapure water. The catalyst ink was dropped onto a glassy carbon disk having a diameter of 10 mm and was dried in an ethanol vapor atmosphere. The dropping and drying of the ink were repeated several times so that the amount of Pt supported was 11 $\mu g/cm^2$ (representative value) . Next, 5 wt% Nafion solution was dropped so that the thickness of the Nafion film after drying was 0.05 um, and the sample was dried at room temperature and then placed in an electric furnace maintained at 130°C for 3 h. The glassy carbon disk coated with the catalyst fixed to a stainless-steel rod was used as a working electrode and attached to a RDE device, and then the working electrode was immersed in a Pyrex three-pole cell filled with 0.1 M perchloric acid electrolyte. After purging the electrolyte with nitrogen for 30 min, the sweep was repeated at a scan rate of 500 mV/s from 0.05 V to 1.0 V until there was no change in the waveform of cyclic voltammogram. Next, the electrochemical surface area (ECA) was obtained from the area of the hydrogen adsorption wave of the cyclic voltammogram obtained at a scan rate of 50 mV/s from 0.05 V to 1.0 V. Next, the electrolyte was purged with oxygen for 30 min, and the linear sweep voltammogram was obtained by sweeping at a scan rate of 5 mV/s from 0.25 V to 1.0 V. The area specific activity and mass activity were calculated from the Koutecky-Levich plot using the current values of the obtained linear sweep voltammogram at 0.70 V, 0.75 V, 0.85 V, 0.90 V.

The mass activity of the supported metal catalyst obtained in Example 5 was also calculated in the same manner. The results are shown in Table 1. As shown in Table 1, both the catalyst of Example 2 prepared by the reverse micelle method and the catalyst of Example 5 (OMC catalyst) prepared by the colloid method using an automatic titrating device showed much higher mass activity than the commercially available catalyst (manufactured by Tanaka Kikinzoku Kogyo, product name: TEC10E50E, 50 wt% Pt/CB catalyst).

[Table 1]

| | Measured Potential | Example 2 | Example 5 | Commercially Available Catalyst |
|---|---|---|---|---|
| Mass Activity MA (A/g) | 0.70V | 32854 | 41331 | 2202 |
| | 0.75V | 15810 | 21431 | 1228 |
| | 0.80V | 4434 | 6139 | 574 |
| | 0.85V | 944 | 1444 | 253 |
| | 0.90V | 177 | 320 | 83 |

<Arrangement State of Platinum Particles>

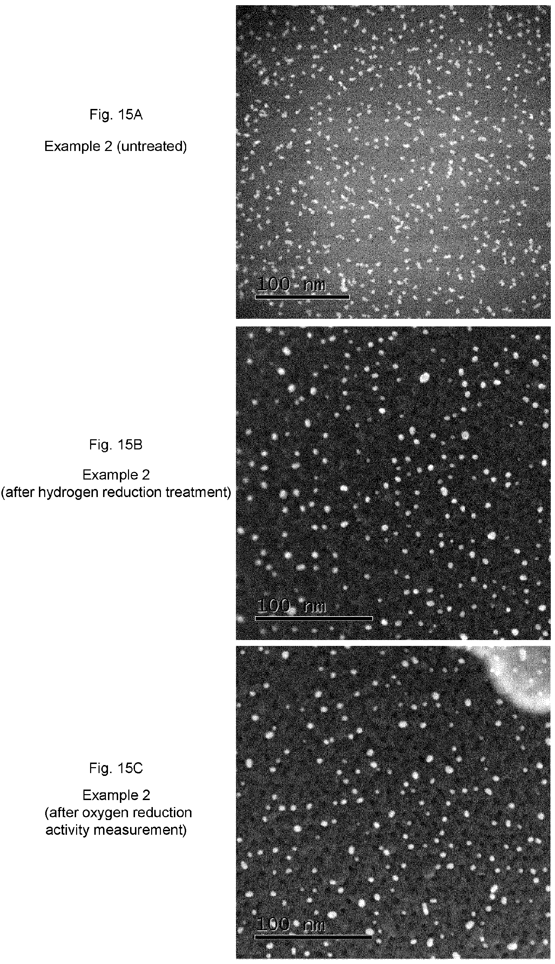

Figs. 15A to 15C each show a Z-contrast image or secondary electron image of the supported metal catalyst. Fig. 15A shows a Z-contrast image in an untreated state after the supporting step, Fig. 15B shows a secondary electron image in a state after hydrogen reduction treatment is performed after the supporting step, and Fig. 15C shows a secondary electron image in a state after oxygen reduction activity measurement is performed after hydrogen reduction.

The hydrogen reduction treatment was performed in a manner such that the sample was transferred to a quartz boat, then the temperature was raised from room temperature to 200°C at 1.5 °C/min in a 5% hydrogen/95% nitrogen stream using a tubular furnace equipped with a quartz reactor, and this temperature was maintained for 2 h.

By comparing these images, it can be seen that the platinum particles in the supported metal catalyst manufactured by the method in this example have the already enhanced regular arrangement in an untreated state, and that state does not change significantly after the hydrogen reduction and oxygen reduction activity measurement. This is thought to be because most of the platinum particles are supported in the pores of the carbon particles, and the regular arrangement of the pores is reflected in the regular arrangement of the platinum particles. The distribution of the distances between the centers of gravity of the platinum particles was measured for the supported metal catalyst after hydrogen reduction, and the distribution shown in Fig. 14B was obtained. The average interparticle distance was 12nm and the standard deviation was 3 nm. By comparing the graphs in Figs. 14A and 14B, it can be seen that the distribution of the distances between the centers of gravity of the platinum particles does not change significantly before and after hydrogen reduction.

2-4. Reference Example 2 (relationship between oxygen concentration on bare support and Pt loading level)

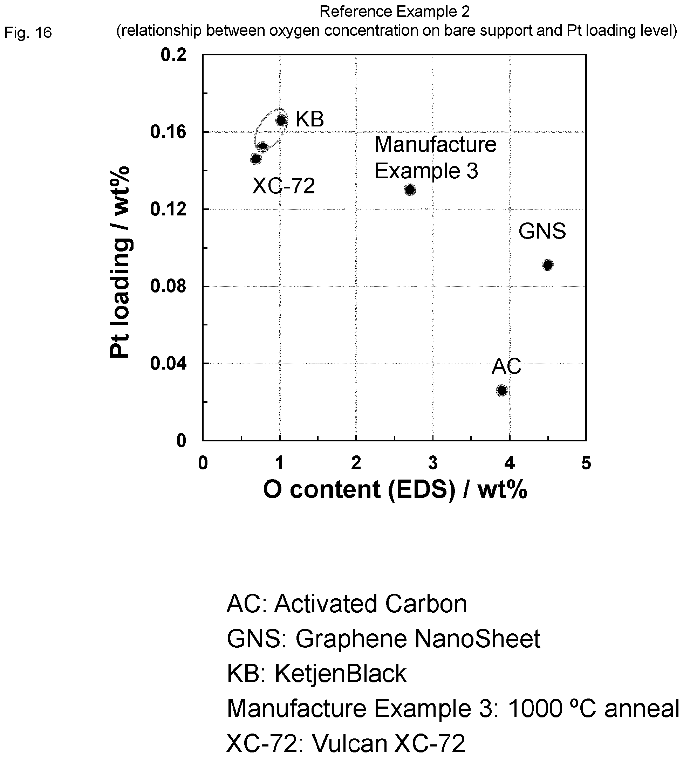

The supported metal catalyst was manufactured in the same manner as in Example 2, except that the support was changed to that shown in Fig. 16. The oxygen content of each support was measured by an EDS method. The platinum loading level was measured in the same manner as in Example 2.

As shown in Fig. 16, the higher the oxygen content, the lower the platinum loading level, suggesting that the platinum loading level can be increased by decreasing the oxygen content.

2-5. Reference Example 3 (relationship between annealing temperature and oxygen concentration)

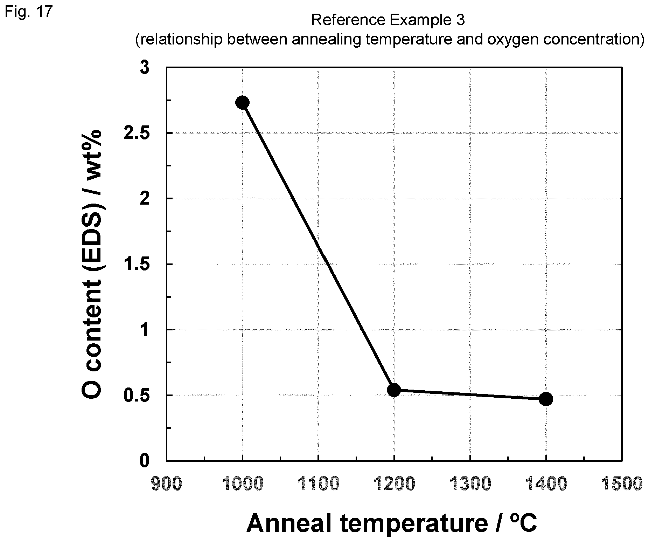

The oxygen contents of carbon particles manufactured in Manufacture Examples 3 to 5 were measured by the EDS method. The relationship between the annealing temperature and the oxygen content is shown in Fig. 17. As shown in Fig. 17, the oxygen content of the carbon particles drastically decreased to approximately 0.5 wt% by annealing at 1200°C. Even when the annealing temperature was increased to 1400°C, the oxygen content decreased only slightly. Since the oxygen content of 0.5 wt% is equivalent to that of XC-72 in Fig. 16, the Pt loading level is expected to increase.

2-6. Example 3 (reverse micelle method, supporting twice, annealing at 1000°C)

In Example 3, the mixing step, reduction step, and supporting step were performed in the same manner as in Example 2, except that carbon particles annealed at 1000°C in Manufacture Example 3 were used.

Next, after performing the hydrogen reduction step (surfactant removal step), the second mixing step, reduction step, and supporting step were performed in the same manner, and then the hydrogen reduction step (surfactant removal step) was performed again to obtain the supported metal catalyst.

The hydrogen reduction step was performed in a manner such that the sample was transferred to a quartz boat, then the temperature was raised from room temperature to 200°C at 1.5°C/min in a 5% hydrogen/95% nitrogen stream using a tubular furnace equipped with a quartz reactor, and this temperature was maintained for 2 h.

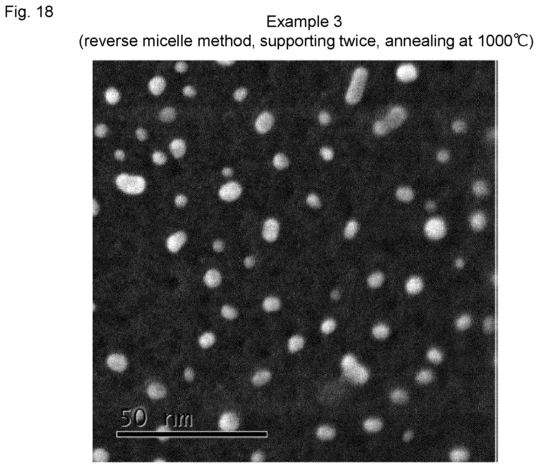

The platinum loading level of the obtained supported metal catalyst was approximately 20 mass%. The secondary electron image of the supported metal catalyst is shown in Fig. 18. As shown in Fig. 18, the platinum particles were linearly arranged in accordance with the arrangement of the pores of the carbon particles. The average interparticle distance and standard deviation of the platinum particles were almost the same as those in Example 2.

2-7. Example 4 (reverse micelle method, supporting twice, annealing at 1400°C)

In Example 4, the supported metal catalyst was manufactured in the same manner as in Example 3, except that carbon particles annealed at 1400°C in Manufacture Example 5 were used.

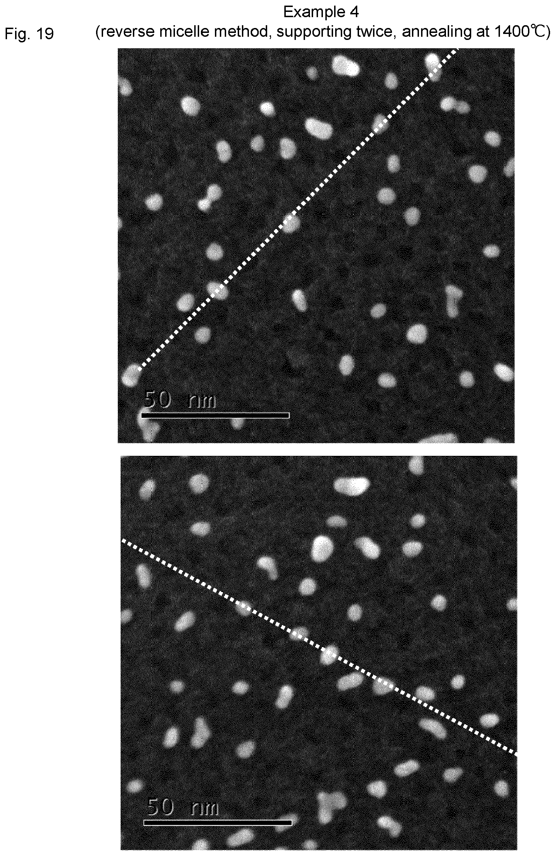

The platinum loading level of the obtained supported metal catalyst was approximately 30 mass%. The secondary electron image of this supported metal catalyst is shown in Fig. 19. As shown in Fig. 19, the platinum particles were linearly arranged in accordance with the arrangement of the pores of the carbon particles. The average interparticle distance and standard deviation of the platinum particles were almost the same as those in Example 2.

2-8. Reference Example 4 (removal of remaining surfactant by hydrogen treatment)

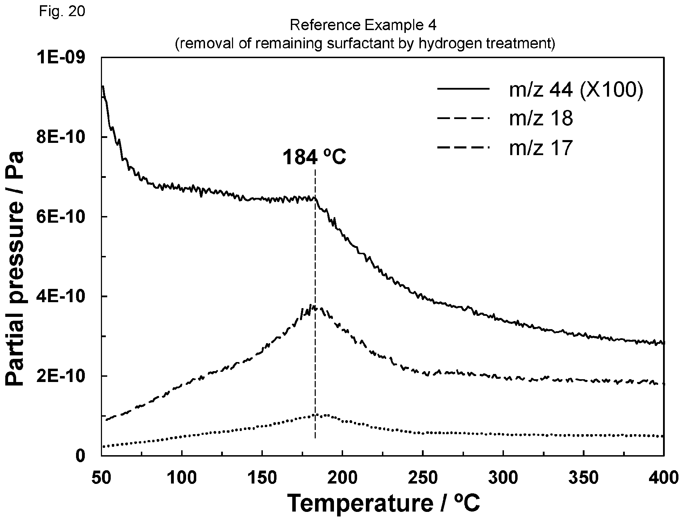

Approximately 50 mg of Pt/KB (reverse micelle method, supporting once, without hydrogen reduction) was heated from room temperature at a rate of 5 °C/min in a 5% $H_2$/95% Ar stream, and the resulting product was detected using a quadrupole mass spectrometer. The results are shown in Fig. 20.

As a result, $H_2O$ (m/z=17, 18) and $CO_2$ (m/z=44) were detected at around 184°C. This is thought to be because the oxygen atoms in the surfactant (polyoxyethylene nonylphenyl ether) molecule were reduced by hydrogen to produce $H_2O$, and the carbon skeleton was oxidized by intramolecular oxygen to produce $CO_2$.

From these results, it is inferred that the small amount of surfactant remaining on the catalyst after supporting is removed by hydrogen reduction treatment at 200°C.

2-9. Example 5 (colloid method, automatic titration, 20 mass%)

<Supporting Step>

To a flat-bottomed beaker, 55.6 mL of ultrapure water, 0.94 g of $H_2PtCl_6$ aqueous solution (200 g/L in platinum equivalent), and 2.94 g of sodium bisulfite were added, and stirred and mixed with a magnetic stirrer. Next, 225 g of ultrapure water was added to this solution while stirring.

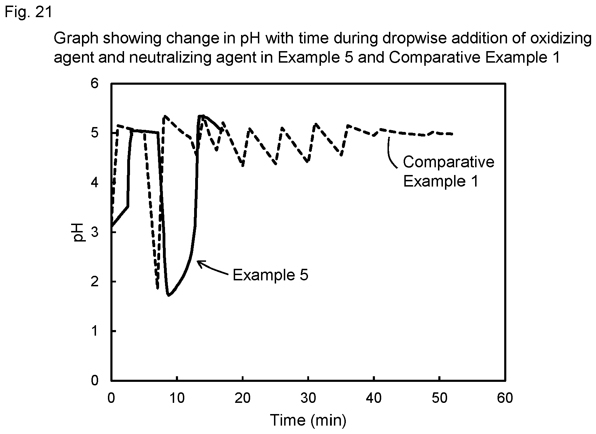

Next, using an automatic titrating device, 5 wt% sodium hydroxide and 30% hydrogen peroxide solution were added dropwise to adjust the final pH to 5.0. More specifically, as shown in the graph in Fig. 21, only sodium hydroxide was first added dropwise to adjust the pH to approximately 5.0, and then only hydrogen peroxide solution was added dropwise to drastically decrease the pH to around 1.8. Thereafter, sodium hydroxide and hydrogen peroxide solution were added simultaneously. The time from the start of dropwise addition of hydrogen peroxide solution to the completion of dropwise addition was approximately 15 min.

The amounts of sodium hydroxide aqueous solution and hydrogen peroxide solution added vary depending on external factors such as temperature, but as an example, the amounts of 5% sodium hydroxide aqueous solution and 30% hydrogen peroxide solution added in this step were 17.4 mL and 22.5 mL, respectively. The solution obtained in this operation is referred to as platinum colloid solution.

Next, 100 mL of ultrapure water was added to another flat-bottomed beaker, and while stirring with a magnetic stirrer, 17.1 mg of the carbon particle powder obtained in Manufacture Example 1 was added and stirred until a uniform suspension was obtained. Next, 10.2 mL of the platinum colloid solution (an amount of platinum equivalent to 20 mass%) was added dropwise over 1 min while stirring this carbon particle suspension. This mixture was heated at 90°C for 3 h with stirring on a hot stirrer and then cooled, filtered, washed with ultrapure water, and dried to obtain a powder.

<Hydrogen Reduction Step>

This powder was transferred to a quartz boat and subjected to the hydrogen reduction treatment at 300°C for 1 h under a hydrogen stream.

<Arrangement State of Platinum Particles>

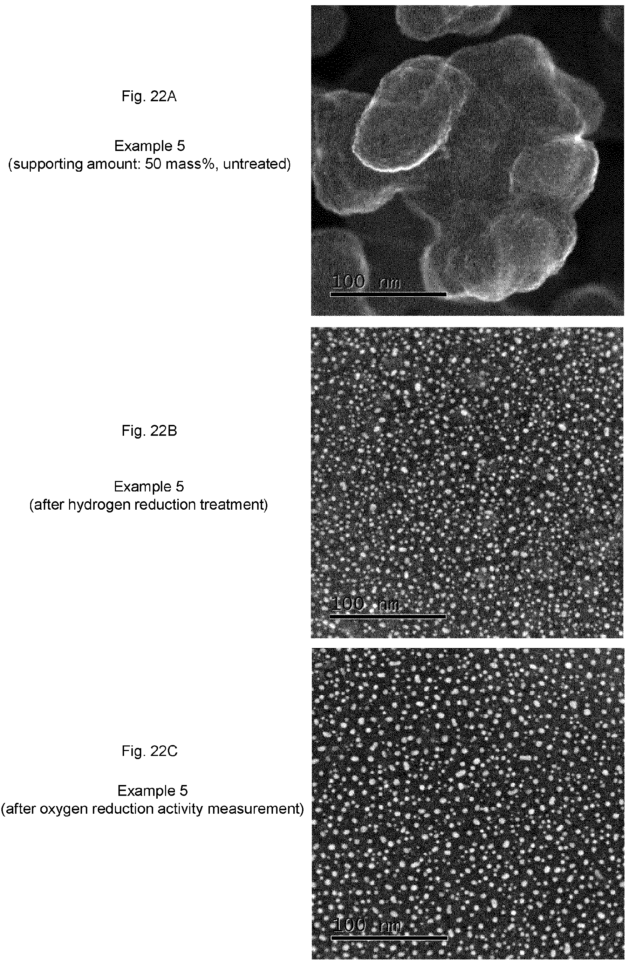

Fig. 22A shows a secondary electron image of a supported metal catalyst manufactured in the same manner as in Example 5, except that an amount of Pt supported was 50 mass%, and Figs. 22B and 22C show secondary electron images of a supported metal catalyst of Example 5. Fig. 22A shows the untreated state after the supporting step, Fig.

22B shows the state after hydrogen reduction treatment is performed after the supporting step, and Fig. 22C shows the state after oxygen reduction activity measurement is performed in the same manner as in Example 2 after hydrogen reduction treatment.

Comparison of these images shows that, for the supported metal catalyst manufactured by the method of this example, platinum is adhered to the surface of carbon particles in the form of a layer in the untreated state, and is not supported in a regular arrangement. On the other hand, platinum is regularly arranged in the form of particles in the state after the hydrogen reduction treatment, and platinum is even more regularly arranged in the state after the oxygen reduction activity measurement. This result indicates that both the hydrogen reduction treatment and the oxygen reduction activity measurement contribute to the enhancement of the regular arrangement of the platinum particles.

The average interparticle distance and standard deviation of the platinum particles after the hydrogen reduction treatment were almost the same as those in Example 2.

2-10. Example 6 (colloid method, automatic titration, 30 mass%)

The supported metal catalyst was manufactured in the same manner as in Example 5, except that the amount of platinum colloid solution added was changed to 15.3 mL (an amount of platinum equivalent to 30 mass%).

<Arrangement State of Platinum Particles>

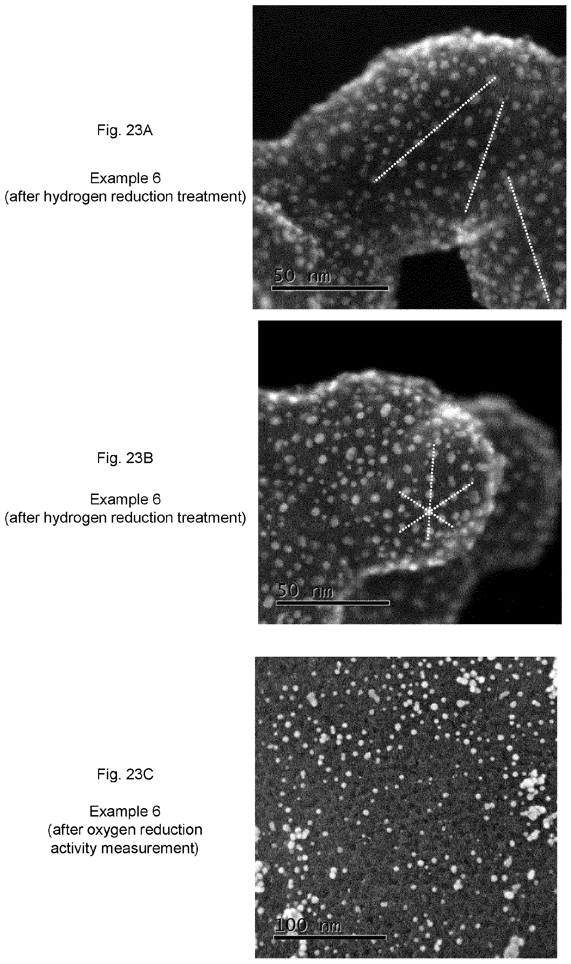

Figs. 23A and 23B show secondary electron images in the state after the hydrogen reduction treatment is performed after the supporting step, and Fig. 23C shows the secondary electron image in the state after the oxygen reduction activity measurement is performed in the same manner as in Example 2 after the hydrogen reduction treatment.

By comparing these images, it was found that the supported metal catalyst manufactured by the method in this example has a regular arrangement of platinum both after the hydrogen reduction treatment and after the oxygen reduction activity measurement. The average interparticle distance and standard deviation of the platinum particles after the hydrogen reduction treatment were almost the same as those in Example 2.

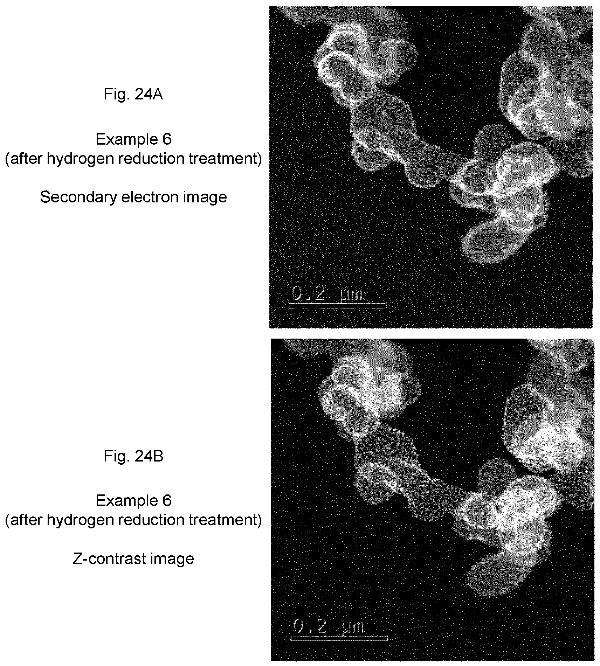

Further, Figs. 24A and 24B are the secondary electron image and the Z contrast image, respectively, in the state after the hydrogen reduction treatment was performed following the supporting step. By comparing these images, it can be seen that, in the supported metal catalyst obtained in this example, almost all of the platinum particles are supported on the surface layer region of the carbon particles.

2-11. Comparative Example 1 (colloid method, manual titration)

<Supporting Step>

In a flat-bottomed beaker, 37 mL of ultrapure water, 0.82 g of $H_2PtCl_6$ aqueous solution (20 g/L in platinum equivalent), and 1.96 g of sodium bisulfite were mixed. Next, 150 g of ultrapure water was added, and 5 wt% sodium hydroxide and 30% hydrogen peroxide solution were added to adjust the final pH to 5.0. More specifically, as shown in the graph in Fig. 21, only sodium hydroxide was added dropwise to adjust the pH to approximately 5.0, and then only hydrogen peroxide solution was added dropwise to drastically decrease the pH to around 1.8. Thereafter, only sodium hydroxide was added dropwise until the pH exceeded the target value of 5.0, and then hydrogen peroxide and sodium hydroxide were added dropwise manually and alternately. The pH fluctuation during alternate dropwise addition was approximately 1. The time from the start of dropwise addition of hydrogen peroxide solution to the completion of dropwise addition was approximately 50 min.

The total amount of 30% hydrogen peroxide solution added in this step was 15 mL. Next, 500 mg of carbon particles obtained in Manufacture Example 1 was added and stirred. This mixture was heated at 90°C with stirring on a hot stirrer and then cooled, filtered, washed with ultrapure water, and dried to obtain a powder.

<Reduction Step>

This powder was transferred to a quartz U-shaped tube and subjected to a reduction treatment at 300°C for 2 h (at a temperature increase rate of 10 °C/min) under a hydrogen stream.

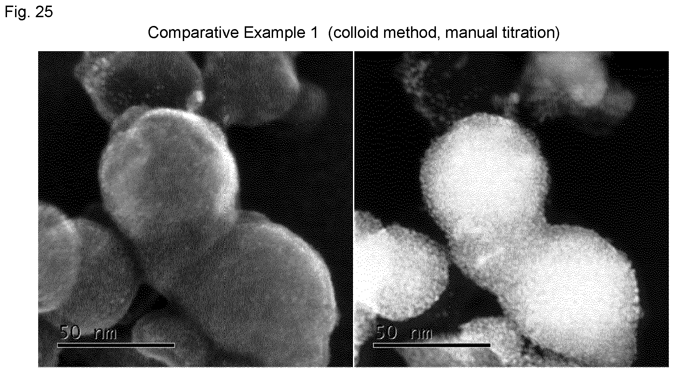

The obtained ZC image (Z-contrast image) and SE image (secondary electron image) of the surface of the supported metal catalyst are shown in Fig. 25. The diameter of the platinum particles supported on the carbon particles was calculated by the same method as Example 1. As a result, the average particle diameter of platinum was 1.1 nm. The comparison of the secondary electron image with the ZC image using STEM showed that the platinum particles were uniformly and non-selectively supported both on the surface layer and inside the support particles.

Further, in Comparative Example 1, there was no difference in the concentration of the active metal present in the surface layer portion and the central portion, and the active metal was uniformly supported on the entire support. On the other hand, in Example 6, almost all of the platinum particles were supported in the surface layer region (surface layer portion > central portion), as shown in Figs. 24A and 24B.

**Reference Signs List**

1: supported metal catalyst,
2: conductive particle,
2a: interconnected structure,
2b: primary particle,
2c: connected portion,
2d: surface,
3: support,
4: active metal particle,
5: pore,
7: carbon source sphere,
8: carbon source cohered body,
8a: gap,
200: fuel cell,
201: anode,
202: cathode,
203: load,
210A: anode-side gas diffusion layer,
210K: cathode-side gas diffusion layer,
220A: anode-side catalyst layer,
220K: cathode-side catalyst layer,
230: electrolyte membrane

**Claims**

1. A supported metal catalyst, comprising:

    a support that is a collective body of conductive particles; and
    dispersed active metal particles supported on the conductive particles, wherein:

        the conductive particles include a plurality of pores;
        an average entrance pore diameter of the pores is 1 to 20 nm;
        a standard deviation of the average entrance pore diameter is equal to or less than 50% of the average entrance pore diameter;
        a number fraction of the active metal particles supported in a surface layer region of the conductive particles divided by a total number of the active metal particles is equal to or more than 50%;
        the surface layer region is a region on a surface of the conductive particles or a region in the pores within a depth of 15 nm from the surface;
        an average interparticle distance of the active metal particles is 5 to 20 nm; and
        a standard deviation of the average interparticle distance is equal to or less than 50% of the average interparticle distance.

2. The supported metal catalyst of Claim 1, wherein a proportion of the active metal particles in the supported metal catalyst is 16 to 50 mass%.

3. The supported metal catalyst of Claim 1, wherein a proportion of the active metal particles in the supported metal catalyst is 21 to 35 mass%.

4. The supported metal catalyst of Claim 1, wherein the conductive particles are carbon particles.

5. The supported metal catalyst of Claim 1, wherein:

   an average interpore distance of the pores is 5 to 20 nm; and
   a standard deviation of the average interpore distance is equal to or less than 50% of the average interpore distance.

6. The supported metal catalyst of Claim 1, wherein the conductive particles are interconnected structures in which an average of 5 or more primary particles are interconnected.

7. The supported metal catalyst of Claim 6, wherein an average series connection number of the interconnected structures is equal to or more than 3.

8. The supported metal catalyst of Claim 1, wherein an average primary particle diameter of the conductive particles is 20 to 100 nm.

9. The supported metal catalyst of Claim 1, wherein a number fraction of the active metal particles supported in the pores divided by a total number of the active metal particles supported in the surface layer region is equal to or more than 40%.

10. The supported metal catalyst of Claim 1, wherein the active metal particles are platinum or platinum alloy particles.

11. The supported metal catalyst of Claim 1, wherein an average particle diameter of the active metal particles is 1 to 8 nm.

12. The supported metal catalyst of Claim 1, wherein a value of [an average particle diameter of the active metal particles divided by the average entrance pore diameter] is 0.2 to 0.8.

13. The supported metal catalyst of Claim 1, wherein a number fraction of the active metal particles supported in the surface layer region of the conductive particles divided by the total number of the active metal particles is equal to or more than 60%.

14. A fuel cell, comprising a cathode-side catalyst layer,
    wherein the cathode-side catalyst layer includes the supported metal catalyst of any one of Claims 1 to 13.

15. A manufacturing method of a supported metal catalyst, comprising:
    an initial addition step; a simultaneous addition step; a supporting step; and a step to enhance regular arrangement, wherein:

    in the initial addition step, an oxidizing agent that oxidizes an active metal precursor to form oxide particles of active metal is added to an active metal precursor solution containing the active metal precursor to generate a colloid;
    in the simultaneous addition step, a neutralizing agent and the oxidizing agent are added simultaneously to the colloid until an amount of the oxidizing agent added reaches a specified amount;
    in the supporting step, a support which is a collective body of conductive particles and the colloid are mixed to support the oxide particles on the conductive particles;
    in the step to enhance regular arrangement, a regular arrangement of the oxide particles or active metal particles generated by reducing the oxide particles is achieved by performing an arrangement treatment;
    the conductive particles include a plurality of pores;
    an average entrance pore diameter of the pores is 1 to 20 nm; and
    a standard deviation of the average entrance pore diameter is equal to or less than 50% of the average entrance pore diameter.

16. The method of Claim 15, wherein the oxidizing agent is hydrogen peroxide.

17. The method of Claim 15, wherein:

    a pH immediately after the initial addition step is 1.0 to 2.5; and
    a pH immediately after the simultaneous addition step is 4.0 to 6.0.

**18.** The method of Claim 15, wherein a time from a start of the initial addition step to a completion of the simultaneous addition step is 10 to 30 min.

**19.** The method of Claim 15, wherein the arrangement treatment includes at least one of heat treatment and/or electrochemical treatment.

**20.** A manufacturing method of a supported metal catalyst, comprising:
a first step; a surfactant removal step; and a second step, wherein:

the first step comprises a first mixing step, a first reduction step, and a first supporting step;
the second step comprises a second mixing step, a second reduction step, and a second supporting step;
in the first mixing step, a first active metal precursor mixed solution is generated by mixing an active metal precursor solution containing an active metal precursor with a surfactant and an organic solvent;
in the first reduction step, active metal particles are generated by a reduction of the active metal precursor in the first active metal precursor mixed solution;
in the first supporting step, a support which is a collective body of conductive particles and the active metal particles are mixed to disperse and support the active metal particles on the conductive particles;
in the surfactant removal step, a surfactant adhered to the support is removed;
in the second mixing step, a second active metal precursor mixed solution is generated by mixing an active metal precursor solution containing an active metal precursor with a surfactant and an organic solvent;
in the second reduction step, active metal particles are generated by a reduction of the active metal precursor in the second active metal precursor mixed solution;
in the second supporting step, the support after the surfactant removal step and the active metal particles obtained in the second reduction step are mixed to disperse and support the active metal particles obtained in the second reduction step on the conductive particles;
the conductive particles include a plurality of pores;
an average entrance pore diameter of the pores is 1 to 20 nm;
a standard deviation of the average entrance pore diameter is equal to or less than 50% of the average entrance pore diameter; and
a count median diameter measured in the first or second active metal precursor mixed solution by a dynamic light scattering method is 0.5 to 2 times as large as the average entrance pore diameter.

**21.** The method of Claim 20, wherein:

in the first reduction step, the reduction is performed by mixing a reducing agent mixed solution containing a reducing agent, an organic agent, water, and a surfactant with the first active metal precursor mixed solution; and
in the second reduction step, the reduction is performed by mixing a reducing agent mixed solution containing a reducing agent, an organic agent, water, and a surfactant with the second active metal precursor mixed solution.

**22.** The method of Claim 20, wherein a removal of the surfactant is performed by heat-treating the support under a reducing gas atmosphere.

**23.** The method of Claim 20, wherein the conductive particles are subjected to an annealing treatment at 800 to 2000°C in a vacuum before the first supporting step.

**24.** The method of Claim 20, wherein the conductive particles are subjected to an annealing treatment at 1100 to 2000°C in a vacuum before the first supporting step.

**25.** A manufacturing method of a supported metal catalyst, comprising:
a mixing step; a reduction step; and a supporting step, wherein:

in the mixing step, an active metal precursor mixed solution is generated by mixing an active metal precursor solution containing an active metal precursor with a surfactant and an organic solvent;
in the reduction step, active metal particles are generated by a reduction of the active metal precursor in the active metal precursor mixed solution;
in the supporting step, a support which is a collective body of conductive particles and the active metal particles are mixed to disperse and support the active metal particles on the conductive particles;
the conductive particles include a plurality of pores;

an average entrance pore diameter of the pores is 1 to 20 nm;

a standard deviation of the average entrance pore diameter is equal to or less than 50% of the average entrance pore diameter;

a count median diameter measured in the mixed solution by a dynamic light scattering method is 0.5 to 2 times as large as the average entrance pore diameter; and

the conductive particles are subjected to an annealing treatment at 1100 to 2000°C in a vacuum before the supporting step.

26. The method of any one of Claims 20 to 25, wherein:

the method comprises a step to enhance regular arrangement after the second supporting step of any one of Claims 20 to 24 or after the supporting step of Claim 25; and

in the step to enhance regular arrangement, a regular arrangement of the active metal particles is achieved by performing an arrangement treatment.

27. The method of Claim 26, wherein the arrangement treatment includes at least one of heat treatment and/or electrochemical treatment.

28. The method of any one of Claims 20 to 25, wherein the organic solvent is a hydrophobic organic solvent and includes at least one selected from cyclohexane, heptane, and toluene.

29. The method of any one of Claims 20 to 25, wherein the surfactant is a nonionic surfactant.

30. The method of any one of Claims 20 to 25, wherein the active metal precursor includes a platinum precursor compound.

31. The method of any one of Claims 15 to 25, wherein the conductive particles are carbon particles.

32. The method of any one of Claims 15 to 25, wherein:

an average interpore distance of the pores is 5 to 20 nm; and

a standard deviation of the average interpore distance is equal to or less than 50% of the average interpore distance.

33. The method of any one of Claims 15 to 25, wherein the conductive particles are interconnected structures in which an average of 5 or more primary particles are interconnected.

34. The method of Claim 33, wherein an average series connection number of the interconnected structures is equal to or more than 3.

35. The method of any one of Claims 15 to 25, wherein an average particle diameter of primary particles of the conductive particles is 20 to 100 nm.

Fig. 1

Fig. 2A

Fig. 2B

Fig. 3

Fig. 4

Fig. 5

Fig. 6

Fig. 7

Fig. 8

Manufacture Example 1 (micelle template, no stirring, interconnected structure)

Fig. 9

Manufacture Example 2 (micelle template, coarse particle)

Fig. 10        Example 1 (reverse micelle method, Rw=3, coarse particle)

Fig. 11

Fig. 12

Example 2 (reverse micelle method, Rw=3, two-liquid mixing method)

Fig. 13

Example 2 (reverse micelle method, Rw=3, two-liquid mixing method)

100 nm

Fig. 14A

Example 2 (untreated)

Median=11(nm)

Frequency (%)

Distance between adjacent centers of gravity (nm)

Cumulative relative frequency (%)

Fig. 14B

Example 2 (after hydrogen reduction)

Median=12(nm)

Frequency (%)

Distance between adjacent centers of gravity (nm)

Cumulative relative frequency (%)

Fig. 15A

Example 2 (untreated)

Fig. 15B

Example 2
(after hydrogen reduction treatment)

Fig. 15C

Example 2
(after oxygen reduction
activity measurement)

Fig. 16

Reference Example 2
(relationship between oxygen concentration on bare support and Pt loading level)

AC: Activated Carbon
GNS: Graphene NanoSheet
KB: KetjenBlack
Manufacture Example 3: 1000 °C anneal
XC-72: Vulcan XC-72

Fig. 17

Reference Example 3
(relationship between annealing temperature and oxygen concentration)

Fig. 18

Example 3
(reverse micelle method, supporting twice, annealing at 1000°C)

Example 4
Fig. 19          (reverse micelle method, supporting twice, annealing at 1400℃)

Fig. 20

Reference Example 4
(removal of remaining surfactant by hydrogen treatment)

Fig. 21

Graph showing change in pH with time during dropwise addition of oxidizing
agent and neutralizing agent in Example 5 and Comparative Example 1

Fig. 22A

Example 5
(supporting amount: 50 mass%, untreated)

Fig. 22B

Example 5
(after hydrogen reduction treatment)

Fig. 22C

Example 5
(after oxygen reduction activity measurement)

Fig. 23A

Example 6
(after hydrogen reduction treatment)

Fig. 23B

Example 6
(after hydrogen reduction treatment)

Fig. 23C

Example 6
(after oxygen reduction
activity measurement)

Fig. 24A

Example 6
(after hydrogen reduction treatment)

Secondary electron image

Fig. 24B

Example 6
(after hydrogen reduction treatment)

Z-contrast image

Fig. 25

Comparative Example 1  (colloid method, manual titration)

## INTERNATIONAL SEARCH REPORT

International application No.

**PCT/JP2022/029914**

### A. CLASSIFICATION OF SUBJECT MATTER

*H01M 4/86*(2006.01)i; *B01J 23/42*(2006.01)i; *B01J 35/10*(2006.01)i; *B01J 37/02*(2006.01)i; *B01J 37/04*(2006.01)i; *B01J 37/10*(2006.01)i; *B01J 37/12*(2006.01)i; *B01J 37/18*(2006.01)i; *B01J 37/34*(2006.01)i; *H01M 4/88*(2006.01)i; *H01M 4/90*(2006.01)i; *H01M 4/92*(2006.01)i; *H01M 8/10*(2016.01)i

FI: H01M4/86 M; H01M4/86 B; H01M4/92; H01M4/90 M; H01M4/88 K; B01J35/10 301G; B01J37/12; B01J37/02 101E; B01J37/10; B01J37/34; B01J37/04 102; B01J37/18; B01J37/02 101A; B01J23/42 M; H01M8/10

According to International Patent Classification (IPC) or to both national classification and IPC

### B. FIELDS SEARCHED

Minimum documentation searched (classification system followed by classification symbols)

H01M4/86; B01J23/42; B01J35/10; B01J37/02; B01J37/04; B01J37/10; B01J37/12; B01J37/18; B01J37/34; H01M4/88; H01M4/90; H01M4/92; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-204700 A (ROBERT BOSCH GMBH) 28 November 2019 (2019-11-28) claim 4, paragraphs [0034]-[0036], [0044], fig. 2 | 1-35 |
| A | WO 2014/175106 A1 (NISSAN MOTOR CO., LTD.) 30 October 2014 (2014-10-30) claim 1, paragraphs [0032], [0035], [0062], fig. 2, 3 | 1-35 |
| P, A | WO 2021/161929 A1 (YAMANASHI UNIVERSITY) 19 August 2021 (2021-08-19) claims 1-3, paragraphs [0020]-[0025], fig. 1-3 | 1-35 |
| P, A | WO 2021/193257 A1 (N.E. CHEMCAT CORP.) 30 September 2021 (2021-09-30) claims 1, 4, paragraphs [0042]-[0045], [0050], fig. 2 | 1-35 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/029914**

| Patent document cited in search report | | | Publication date (day/month/year) | Patent family member(s) | | | Publication date (day/month/year) |
|---|---|---|---|---|---|---|---|
| JP | 2019-204700 | A | 28 November 2019 | WO 2019/224646 A1 claim 4, paragraphs [0034]-[0036], [0044], fig. 2 | | | |
| WO | 2014/175106 | A1 | 30 October 2014 | US 2016/0064744 A1 claim 1, paragraphs [0038], [0041], [0072], fig. 2, 3 | | | |
| | | | | EP | 2990109 | A1 | |
| | | | | CN | 105163849 | A | |
| WO | 2021/161929 | A1 | 19 August 2021 | (Family: none) | | | |
| WO | 2021/193257 | A1 | 30 September 2021 | (Family: none) | | | |

Form PCT/ISA/210 (patent family annex) (January 2015)

**REFERENCES CITED IN THE DESCRIPTION**

**Patent documents cited in the description**

- JP 2018010806 A